(19) Europäisches Patentamt
European Patent Office
Office européen des brevets

(11) EP 4 726 005 A1

(12) # EUROPEAN PATENT APPLICATION
published in accordance with Art. 153(4) EPC

(43) Date of publication:
**15.04.2026 Bulletin 2026/16**

(21) Application number: **24839867.9**

(22) Date of filing: **19.04.2024**

(51) International Patent Classification (IPC):
***C09J 4/00*** *(2006.01)* ***C09J 7/30*** *(2018.01)*
***C09J 5/00*** *(2006.01)* ***C08F 220/20*** *(2006.01)*
***C08F 220/18*** *(2006.01)* ***C08F 2/50*** *(2006.01)*
***C09J 7/35*** *(2018.01)* ***C09J 9/00*** *(2006.01)*

(52) Cooperative Patent Classification (CPC):
**C08F 2/50; C08F 220/18; C08F 220/20; C09J 4/00; C09J 5/00; C09J 7/30; C09J 7/35; C09J 9/00**

(86) International application number:
**PCT/KR2024/005333**

(87) International publication number:
**WO 2025/014050 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 KR 20230089202**
**05.01.2024 KR 20240002361**

(71) Applicant: **Seoul National University R&DB Foundation**
**Seoul 08826 (KR)**

(72) Inventors:
- **KWON, Min Sang**
**Seongnam-si Gyeonggi-do 13581 (KR)**
- **LEE, Seokju**
**Seoul 08785 (KR)**
- **KIM, Daewhan**
**Seoul 08758 (KR)**

(74) Representative: **AWA Sweden AB**
**Box 5117**
**200 71 Malmö (SE)**

(54) **ULTRAVIOLET DETACHABLE ADHESIVE COMPOSITION, ADHESIVE FILM PREPARED USING SAME, AND METHOD FOR PEELING OFF ADHESIVE FILM**

(57) The present invention relates to an ultraviolet detachable adhesive composition, an adhesive film prepared by using the same, and a method of peeling off the adhesive film.

According to the present invention, by incorporating a monomer that imparts UV detachment properties into an adhesive composition to which a photoinitiating system is applied, it is possible to prepare an adhesive resin that exhibits excellent adhesive strength after visible light curing and whose adhesive strength is easily reduced upon UV irradiation.

Therefore, when using the present invention, in cases where removal of the adhesive is required after curing, for example, due to lamination errors, the adhesive can be easily detached and removed from an adherend without complex processes or damage to components.

【FIG. 1】

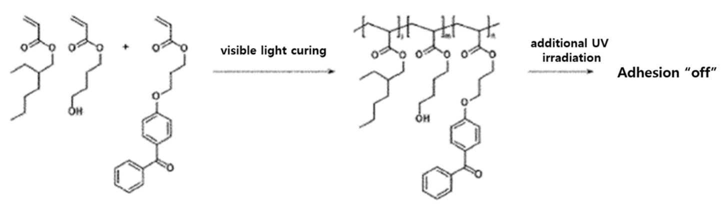


EP 4 726 005 A1

Processed by Luminess, 75001 PARIS (FR)

## Description

[Technical Field]

The present invention relates to an ultraviolet detachable adhesive composition, an adhesive film prepared using the same, and a method for peeling off the adhesive film, and more specifically, to an adhesive composition which, by introducing a photoinitiation monomer, is readily detachable by ultraviolet irradiation even after visible light curing, an adhesive film prepared using the same, and a method for peeling off the adhesive film.

[Background Art]

In modern society, as the reuse and recycling of product designs become important, a function capable of selectively removing an adhesive when necessary is required. Such a detachable adhesive may be usefully used not only for reuse and recycling purposes, but also in terms of rapid assembly and disassembly, and repair and maintenance of components.

Display devices such as smartphones are assembled by bonding individual components with an adhesive, and a representative adhesive used in conventional electronic devices is an ultraviolet-curable adhesive. As one example, Korean Laid-Open Patent Publication No. 10-2019-0011220 discloses an adhesive composition that, as an ultraviolet-curable pressure-sensitive adhesive used for displays and the like, comprises polyurethane (meth)acrylate, a polymerizable monomer, a hydroxy group-containing mono(meth)acrylate, a photopolymerization initiator, and a tackifier resin, and can form a pressure-sensitive adhesive layer having good tack.

Recently, as various form-factor devices such as foldable smartphones have become common, the demand for adhesive functions has further increased, and the adhesive must satisfy various requirements beyond merely connecting the films of individual elements. For example, the adhesive is required to have, in addition to characteristics of dissipating stress while maintaining an appropriate balance between flexibility and elasticity, functionalities such as optical transparency, stability against moisture and heat, and ultraviolet-blocking properties.

In addition, as the structure of electronic devices becomes complicated, film lamination errors may occur during manufacturing, and when high-priced components such as a display panel and ultrathin glass (UTG) are involved, a problem arises in that costs greatly increase. Therefore, in order to reduce such costs, it is important to allow the adhesive to be removed from the high-priced components so that they can be reused. However, general adhesive removal processes were not only complicated but also required the use of special equipment, and there was a problem that components were damaged during removal.

As a technology for solving such problems, detachable adhesives are being developed, and for example, Korean Registered Patent Publication No. 10-2108610 provides an adhesive composition comprising an organic acid as a detachable adhesive composition. However, in this case, since the adhesive composition is coated to form an adhesive layer and then detached through thermal curing, there was a problem that it could not be applied to heat-sensitive components. In addition, since a specific monomer must be included in a polymer and the physical properties of a final adhesive may be limited, there was a limitation in that it was difficult to satisfy the requirements of excellent transparency while being applicable to a foldable display.

Accordingly, there is a need for the development of an adhesive that can satisfy various physical properties required for an adhesive while being easily removable when necessary.

[Disclosure]

[Technical Problem]

The object of the present invention is to provide an adhesive composition which is cured by visible light and is detachable by ultraviolet irradiation.

Another object of the present invention is to provide an ultraviolet detachable adhesive film prepared using the ultraviolet detachable adhesive composition.

Still another object of the present invention is to provide a method for simply peeling off an adhesive film using ultraviolet light.

[Technical Solution]

To achieve the above object, the present invention provides an ultraviolet detachable adhesive composition comprising a photoinitiation monomer having an absorption property in a wavelength region of 100 to 400 nm; a polymerizable monomer having an ethylenic unsaturated bond; and a photoinitiation system comprising a photocatalyst

or a photoinitiator.

In the present invention, the photoinitiation monomer may comprise a compound represented by the following Chemical Formula 1:

[Chemical Formula 1]

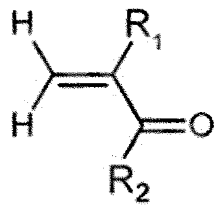

In Chemical Formula 1,

$R_1$ is hydrogen, deuterium, a halogen atom, or a substituted or unsubstituted $C_1$-$C_{12}$ alkyl,
$R_2$ is -R", -CR"$_3$, -O-L-R", -O-L-O-R", -O-L-O-C(=O)-R", -NH-L-R", -NH-L-O-R" or -NH-L-O-C(=O)-R", L is absent, or a substituted or unsubstituted $C_1$-$C_{12}$ alkyl,
and R" is a substituted or unsubstituted $C_1$-$C_{24}$ alkyl, $C_2$-$C_{24}$ alkenyl, $C_2$-$C_{24}$ alkynyl, $C_6$-$C_{18}$ aryl, or 4-benzoylphenyl.

Preferably, in Chemical Formula 1, $R_2$ is -O-L-R", -O-L-O-R", -O-L-O-C(=O)-R", - NH-L-R", -NH-L-O-R" or -NH-L-O-C(=O)-R", L is absent, or a substituted or unsubstituted $C_1$-$C_{12}$ alkyl, and R" may be a substituted or unsubstituted $C_6$-$C_{18}$ aryl or 4-benzoylphenyl.

In the present invention, the photoinitiation monomer may be comprised in an amount of 0.1 to 10 mol% based on the total monomers (the polymerizable monomer and the photoinitiation monomer).

In the present invention, the polymerizable monomer may comprise an alkyl (meth)acrylate compound and an alkyl (meth)acrylate compound having a hydroxyl group.

In the present invention, the photoinitiation system comprising the photocatalyst or the photoinitiator may have a property of absorbing light in a wavelength region of 300 to 800 nm.

The ultraviolet detachable adhesive composition of the present invention may comprise, as the photocatalyst of the photoinitiation system, a cyanoarene-based photocatalyst having a thermally activated delayed fluorescence (TADF) property.

In the present invention, the cyanoarene-based photocatalyst may be represented by the following Chemical Formula 2:

[Chemical Formula 2]

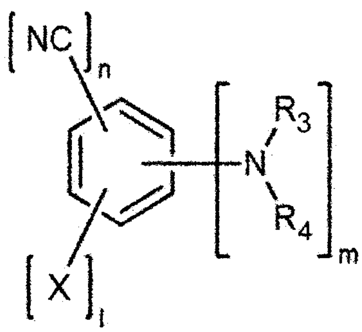

In Chemical Formula 2,

$R_3$ and $R_4$ are each independently hydrogen, deuterium, a halogen atom, a nitro group (-$NO_2$), a cyano group (-CN), -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or are linked to each other to form a substituted or unsubstituted carbazole

structure;
X is a halogen atom selected from the group consisting of F, Cl, Br, and I;
n is 1 or 2, m is an integer of 3 to 5, and l is 0 or 1, and n + m + l is an integer of 4 to 6.

In the present invention, the cyanoarene-based photocatalyst may be represented by the following Chemical Formula 3 or 4:

[Chemical Formula 3]

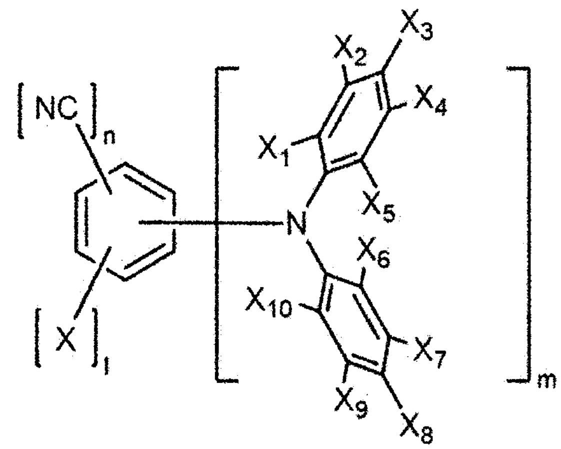

[Chemical Formula 4]

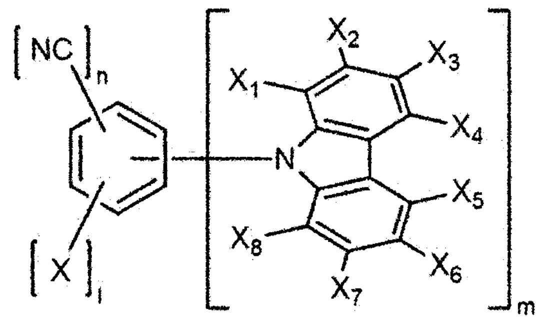

In Chemical Formula 3, $X_1$ to $X_{10}$ are each independently hydrogen, deuterium, a halogen atom, $-NO_2$, -CN, -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl.

In Chemical Formula 4, $X_1$ to $X_8$ are each independently hydrogen, deuterium, a halogen atom, $-NO_2$, -CN, -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl.

In Chemical Formulae 3 and 4, each independently, X is a halogen atom selected from the group consisting of F, Cl, Br, and I, n is 1 or 2, m is an integer of 3 to 5, and l is 0 or 1, and n + m + l is an integer of 4 to 6.

In the present invention, the photoinitiation system may comprise a photocatalyst, and the adhesive composition may further comprise a co-initiator.

In the present invention, the co-initiator used together with the photocatalyst may comprise co-initiator I represented by the following Chemical Formula 5, co-initiator II represented by the following Chemical Formula 6, or both:

[Chemical Formula 5]

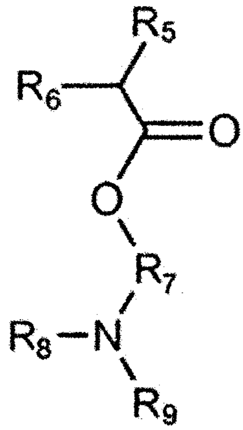

[Chemical Formula 6]

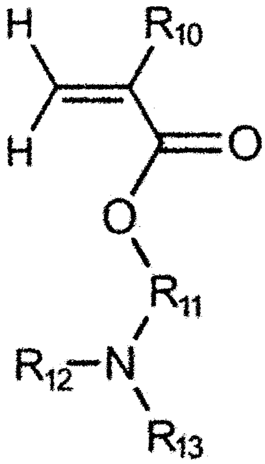

In Chemical Formula 5, $R_5$ and $R_6$ are each independently hydrogen, deuterium, or a substituted or unsubstituted $C_1$-$C_{12}$ alkyl, $R_7$ is absent, or a substituted or unsubstituted $C_1$-$C_{12}$ alkyl, and $R_8$ and $R_9$ are each independently a substituted or unsubstituted $C_1$-$C_{12}$ alkyl.

In Chemical Formula 6, $R_{10}$ is hydrogen, deuterium, a halogen atom, or a substituted or unsubstituted $C_1$-$C_{12}$ alkyl, $R_{11}$ is absent, or a substituted or unsubstituted $C_1$-$C_{12}$ alkyl, and $R_{12}$ and $R_{13}$ are each independently a substituted or unsubstituted $C_1$-$C_{12}$ alkyl.

In the present invention, the co-initiator used together with the photocatalyst may comprise an anionic co-initiator which is co-initiator III, a cationic co-initiator which is co-initiator IV, or both.

In the present invention, the anionic co-initiator may be a borate salt compound.

In the present invention, the cationic co-initiator may comprise at least one compound selected from the group consisting of iodonium salts, sulfonium salts, and phosphonium salts.

In the present invention, the photoinitiator may initiate a curing reaction by absorbing light in a wavelength region of 300 to 600 nm.

In the present invention, the photoinitiator may be a Norrish type I photoinitiator.

In the present invention, the Norrish type I photoinitiator may comprise a compound represented by the following Chemical Formula 15:

[Chemical Formula 15]

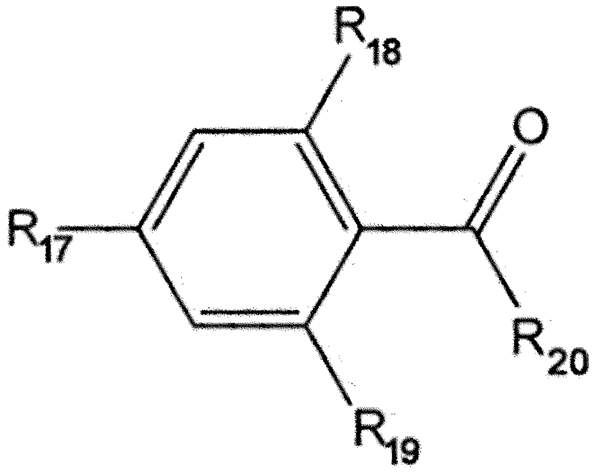

In Chemical Formula 15,

$R_{17}$, $R_{18}$, and $R_{19}$ are each independently hydrogen, deuterium, or a substituted or unsubstituted $C_1$-$C_{24}$ alkyl, $C_2$-$C_{24}$ alkenyl, $C_2$-$C_{24}$ alkynyl, $C_4$-$C_{18}$ aryl, a mercapto group (-SH), a hydroxyl group (-OH), an alkylthio group (-SR), or an alkoxy group (-OR),
and $R_{20}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, a phosphine oxide group, a phosphinate group, an amine group, or a morpholino group.

In the present invention, the Norrish type I photoinitiator may comprise at least one selected from the group consisting of acylphosphine oxide-based photoinitiators, acetophenone-based photoinitiators, benzoin-based photoinitiators, and benzoin ether-based photoinitiators.
In the present invention, the adhesive composition may further comprise a co-initiator, and the photoinitiation system may comprise a Norrish type II photoinitiator which undergoes a Norrish type II reaction with the co-initiator.
In the present invention, the Norrish type II photoinitiator may comprise a compound represented by the following Chemical Formula 16:

[Chemical Formula 16]

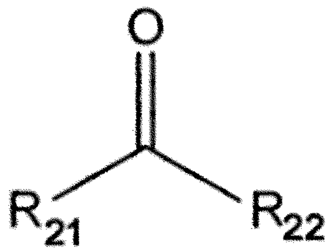

In Chemical Formula 16,

$R_{21}$ and $R_{22}$ are each independently a substituted or unsubstituted $C_1$-$C_{24}$ alkyl, $C_2$-$C_{24}$ alkenyl, $C_2$-$C_{24}$ alkynyl, or $C_4$-$C_{18}$ aryl,
and $R_{21}$ and $R_{22}$ exist independently, or one or more of the respective atoms of $R_{21}$ and $R_{22}$ are linked to each other to form a ring.

In the present invention, the Norrish type II photoinitiator may comprise at least one selected from the group consisting of thioxanthone photoinitiators, benzophenone-based photoinitiators, and camphorquinone-based photoinitiators.
In the present invention, the co-initiator used together with the Norrish type II photoinitiator may comprise a

compound represented by the following Chemical Formula 17:

[Chemical Formula 17]

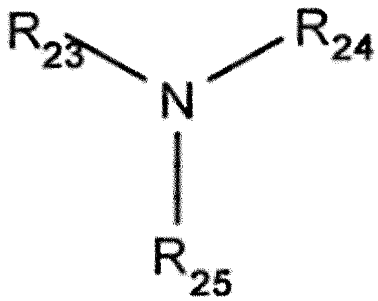

In Chemical Formula 17,

$R_{23}$, $R_{24}$, and $R_{25}$ are each independently hydrogen, deuterium, $NH_xR''_{2-x}$, -OR", - COR", -COOR", or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl,
R" is hydrogen or a $C_1$-$C_{24}$ alkyl,
and x is an integer of 0 to 2.

The present invention also provides an adhesive film prepared by irradiating visible light to the ultraviolet detachable adhesive composition.

The present invention also provides a method for peeling off the adhesive film, comprising irradiating ultraviolet light to the adhesive film to reduce adhesion.

In the method of the present invention, the irradiation dosage of the ultraviolet light may be 500 to 50,000 mJ/$cm^2$ in terms of integrated light quantity.

[Advantageous Effects]

According to the present invention, by using a photoinitiation monomer that imparts ultraviolet detachability to an adhesive composition to which a photoinitiation system is applied, an adhesive resin having excellent adhesion after visible-light curing and in which adhesion is easily reduced by ultraviolet irradiation can be prepared. Therefore, by using the present invention, when removal of an adhesive is required due to lamination errors after curing and the like, the adhesive can be easily peeled off and removed from an adherend without a complicated process or damage to components.

[Description of Drawings]

FIG. 1 illustrates the monomers and resin structure of an adhesive prepared according to one embodiment of the present invention, and a change in adhesion according to light irradiation.
FIG. 2 is a graph showing adhesion according to the amount of the photoinitiation monomer and the dosage of ultraviolet irradiation when ultraviolet light is irradiated to an adhesive resin prepared according to one embodiment of the present invention.
FIG. 3 is a graph showing the adhesion reduction rate according to the amount of the photoinitiation monomer and the dosage of ultraviolet irradiation when ultraviolet light is irradiated to an adhesive resin prepared according to one embodiment of the present invention.
FIG. 4 is a graph showing adhesion, conversion rate, and gel fraction according to the dosage of ultraviolet irradiation when ultraviolet light is irradiated to an adhesive resin prepared according to one embodiment of the present invention.
FIG. 5 is a graph showing a change in elastic modulus according to ultraviolet irradiation time when ultraviolet light is irradiated to an adhesive resin prepared according to one embodiment of the present invention.
FIG. 6 is a graph showing the conversion rate according to the amount of the photoinitiation monomer and light dosage for an adhesive resin prepared according to one embodiment of the present invention.

FIG. 7 is a graph showing the adhesion reduction rate according to the amount of the photoinitiation monomer and the dosage of ultraviolet irradiation when ultraviolet light is irradiated to an adhesive resin prepared according to one embodiment of the present invention.

[Best Mode for Invention]

Hereinafter, the concrete embodiments of the present invention will be described in more detail. Unless defined otherwise, all technical and scientific terms used in the present specification have the same meanings as conventionally understood by those skilled in the art to which the present invention pertains. In general, the nomenclature used in the present specification is well known and commonly used in the technical field.

In describing the present invention, the "substitution" of a functional group means that one or more hydrogen atoms in the functional group are substituted with another functional group, and, for example, one or more hydrogen atoms are each independently substituted with deuterium, a halogen atom, a nitro group ($-NO_2$), a cyano group (-CN), -COOR, $-NRCOCH_3$, -SR, $-COONH_xR_{2-x}$, $NH_xR_{2-x}$, $-CONH_xR_{2-x}$, -OR, -SR, -SOR, -SOOR, $-NH_xR_{2-x}$, $-PH_xR_{2-x}$, $-P(OR)_2$, an azide ($-N_3$), $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Here, the "R" is for describing the bonding form of the functional group and is not particularly limited, and may be, for example, a hydrocarbon group such as hydrogen, a $C_1$-$C_{24}$ alkyl, a $C_2$-$C_{24}$ alkenyl, a $C_2$-$C_{24}$ alkynyl, or a $C_4$-$C_{18}$ aryl.

In the present invention, the alkyl is a hydrocarbon group consisting of single bonds (methyl, ethyl, n-propyl, isopropyl, n-butyl, isobutyl, tert-butyl, sec-butyl, 1-methyl-butyl, 1-ethyl-butyl, n-pentyl, isopentyl, neopentyl, tert-pentyl, n-hexyl, 1-methylpentyl, 2-methylpentyl, 4-methyl-2-pentyl, 3,3-dimethylbutyl, 2-ethylbutyl, n-heptyl, 1-methylhexyl, cyclopentylmethyl, cyclohexylmethyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 2-methylpentyl, 4-methylhexyl, 5-methylhexyl, etc.), and the alkenyl is a hydrocarbon group containing one or more double bonds (vinyl, allyl, etc.), and the alkynyl is a hydrocarbon group containing one or more triple bonds (ethynyl, propynyl, etc.), and the aryl means a hydrocarbon having one or more aromatic rings (phenyl, biphenyl, naphthyl, anthracyl, phenanthryl, terphenyl, fluorenyl, furan, pyrrolyl, thiophenyl, thiazolyl, etc.).

In describing the present invention, the alkyl, alkenyl, alkynyl, or aryl is interpreted as including not only functional groups composed only of carbon and hydrogen atoms, but also heteroalkyl, heteroalkenyl, heteroalkynyl, or heteroaryl in which one or more carbon atoms are substituted with nitrogen, oxygen, or sulfur. In addition, the alkyl, alkenyl, and alkynyl include linear, branched, and cyclic forms.

In the present invention, the term "adhesive" is interpreted as including not only an adhesive in a general sense but also a pressure-sensitive adhesive (PSA), that is, a tackifier.

The present invention relates to an ultraviolet detachable adhesive composition, an adhesive resin prepared using the same, and a method for preparing the adhesive resin.

The ultraviolet detachable adhesive composition of the present invention is characterized in that the photoinitiation monomer is used together with the polymerizable monomer, and when ultraviolet light is irradiated to the adhesive resin cured by visible light, adhesion is rapidly reduced, so that the adhesive can be easily removed from an adherend.

The ultraviolet detachable adhesive composition of the present invention comprises a photoinitiation monomer having an absorption property in a wavelength region of 100 to 400 nm; a polymerizable monomer having an ethylenic unsaturated bond; and a photoinitiation system comprising a photocatalyst or a photoinitiator.

In the present invention, by using the photoinitiation monomer together with the polymerizable monomer of the adhesive composition, an adhesive resin having an excellent conversion rate by visible light can be prepared, and an adhesive whose adhesion is reduced by ultraviolet irradiation and is detachable from an adherend can be prepared.

In the present invention, the polymerizable monomer used in the adhesive composition means a monomer having an ethylenic unsaturated bond, and a polymerization reaction occurs between the monomers due to radicals generated by light irradiation, whereby an adhesive resin, which is a cured product, is formed.

In one embodiment of the present invention, the polymerizable monomer may be an acrylate-based compound. Specifically, the polymerizable monomer may be a (meth)acrylate or (meth)acrylamide compound, and the term "(meth) acryl" is used to refer collectively to acryl and methacryl.

For example, the polymerizable monomer may comprise one or more compounds selected from the group consisting of methyl (meth)acrylate, ethyl (meth)acrylate, propyl (meth)acrylate, isopropyl (meth)acrylate, lauryl (meth) acrylate, 2-ethylhexyl (meth)acrylate, dicyclopentadiene (meth)acrylate, dicyclopentenyloxyethyl (meth)acrylate, dicyclopentenyl (meth)acrylate, isobornyl (meth)acrylate, (meth)acrylamide, N,N-dimethyl(meth)acrylamide, (meth)acryloylmorpholine, isobutoxymethyl(meth)acrylamide, t-octyl (meth)acrylamide, diacetone(meth)acrylamide, ethyldiethylene glycol (meth)acrylate, ethyldiethylene glycol (meth)acrylate, polyethylene glycol mono(meth)acrylate, polypropylene glycol mono(meth)acrylate, borneol(meth)acrylate, methyltriethylene glycol (meth)acrylate, ethylene glycol di(meth) acrylate, dicyclopentenyl di(meth)acrylate, triethylene glycol di(meth)acrylate, tetraethylene glycol di(meth)acrylate, tricyclodecane diyl dimethylene di(meth)acrylate, tris(2-hydroxyethyl)isocyanurate di(meth)acrylate, tris(2-hydroxyethyl)isocyanurate tri(meth)acrylate, trimethylolpropane tri(meth)acrylate, tripropylene glycol di(meth)acrylate, neopentyl glycol di(meth)acrylate, 1,4-butanediol di(meth)acrylate, 1,6-hexanediol di(meth)acrylate, pentaerythritol tri(meth) acrylate, pentaerythritol tetra(meth)acrylate, polyester di(meth)acrylate, polyethylene glycol di(meth)acrylate, dipentaerythritol penta(meth)acrylate, dipentaerythritol tetra(meth)acrylate, trimethylolpropane tetra(meth)acrylate, tetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl (meth)acrylate, phenoxyethyl (meth)acrylate, butoxyethyl (meth)acrylate, pentachlorophenyl (meth)acrylate, and pentabromophenyl (meth)acrylate.

In the present invention, as the polymerizable monomer, alkyl (meth)acrylate and alkyl (meth)acrylate having a hydroxyl group may be used in combination. The molar ratio of the alkyl (meth)acrylate and the alkyl (meth)acrylate having a hydroxyl group may be 50:50 to 99:1, preferably 60:40 to 95:5, and more preferably 75:25 to 90:10.

In this regard, in the embodiments of the present invention, when the ratio of n-BA and 4-HBA was adjusted to 6:4, 7:3, 8:2 or 9:1 as the polymerizable monomers while the photocatalyst, photoinitiation monomer, and other light irradiation conditions were the same, it was confirmed that adhesion decreased by 90% or more when the ratios were 8:2 and 9:1, and that the decrease rate was 95.9% at 8:2, meaning that the adhesive could be peeled most easily. In this respect, the molar ratio of the alkyl (meth)acrylate and the alkyl (meth)acrylate having a hydroxyl group may be most preferably 78:22 to 85:15.

In the present invention, the photoinitiation monomer used is an ultraviolet detachable monomer component capable of reducing adhesion through absorption in the ultraviolet region, and is characterized in that a photoinitiator structure having an absorption property in a wavelength region of 100 to 400 nm is included in the monomer.

In one embodiment of the present invention, the photoinitiation monomer may comprise a compound represented by the following Chemical Formula 1:

[Chemical Formula 1]

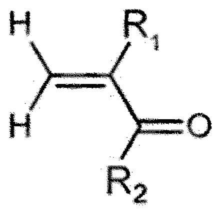

In Chemical Formula 1, $R_1$ is hydrogen, deuterium, a halogen atom, or a substituted or unsubstituted $C_1$-$C_{12}$ alkyl, $R_2$ is -R", -CR"$_3$, -O-L-R", -O-L-O-R", -O-L-O-C(=O)-R", -NH-L-R", -NH-L-O-R" or -NH-L-O-C(=O)-R", L is absent, or a substituted or unsubstituted $C_1$-$C_{12}$ alkyl, and R" may be a substituted or unsubstituted $C_1$-$C_{24}$ alkyl, $C_2$-$C_{24}$ alkenyl, $C_2$-$C_{24}$ alkynyl, $C_6$-$C_{18}$ aryl, or 4-benzoylphenyl.

Preferably, in Chemical Formula 1, $R_2$ is -O-L-R", -O-L-O-R", -O-L-O-C(=O)-R", -NH-L-R", -NH-L-O-R" or -NH-L-O-C(=O)-R", L is absent, or a substituted or unsubstituted $C_1$-$C_{12}$ alkyl, and R" is a substituted or unsubstituted $C_6$-$C_{18}$ aryl or 4-benzoylphenyl. Preferably, R" may be a substituted or unsubstituted $C_6$-$C_{18}$ aryl or 4-benzoylphenyl substituted with a halogen, an azide (-$N_3$), or a hydroxyl group.

For example, in the present invention, the photoinitiation monomer may comprise one or more selected from the group consisting of 4-acryloyloxy benzophenone, 4-acryloyloxyethoxy benzophenone, 4-acryloyloxy-4'-methoxy benzophenone, 4-acryloyloxyethoxy-4'-methoxy benzophenone, 4-acryloyloxy-4'-bromobenzophenone, 4-acryloyloxyethoxy-4'-bromo benzophenone, 4-methacryloyloxy benzophenone, 4-methacryloyloxyethoxy benzophenone, 4-methacryloyloxy-4'-methoxy benzophenone, 4-methacryloyloxyethoxy-4'-methoxy benzophenone, 4-methacryloyloxy-4'-bromo benzophenone, 4-methacryloyloxyethoxy-4'-bromo benzophenone, 3-(4-benzoylphenoxy)propyl acrylate, 3-(4-benzoylphenoxy)butyl acrylate, 3-(4-benzoylphenoxy)pentyl acrylate, 3-(4-benzoylphenoxy)hexyl acrylate, 3-(4-benzoylphenoxy)heptyl acrylate, 3-(4-benzoylphenoxy)octyl acrylate, 3-(4-benzoylphenoxy)nonyl acrylate, 3-(4-benzoylphenoxy)decyl acrylate, 4-azido-2,3,5,6-tetrafluorobenzyl (meth)acrylate, N-(benzoylphenyl) (meth)acrylamide, 4-benzoylphenyl (meth)acrylate, 2-benzoylbenzyl (meth)acrylate, 4-azido-2,3,5,6-tetrafluorophenethyl (meth)acrylate, 3-(4-azido-2,3,5,6-tetrafluorophenyl)propyl (meth)acrylate, 4-(4-azido-2,3,5,6-tetrafluorophenyl)butyl (meth)acrylate, 5-(4-azido-2,3,5,6-tetrafluorophenyl)pentyl (meth)acrylate, 6-(4-azido-2,3,5,6-tetrafluorophenyl)hexyl (meth)acrylate, 8-(4-azido-2,3,5,6-tetrafluorophenyl)octyl (meth)acrylate, 9-(4-azido-2,3,5,6-tetrafluorophenyl)nonyl (meth)acrylate, and 10-(4-azido-2,3,5,6-tetrafluorophenyl)decyl (meth)acrylate.

In the present invention, the photoinitiation monomer may be used in an amount of 0.1 to 10 mol% based on the total monomers forming the resin (that is, the polymerizable monomer and the photoinitiation monomer). Preferably, the amount of the photoinitiation monomer may be 1 to 5 mol% based on the total monomers. Within this range, the conversion rate of the adhesive by visible light irradiation during adhesive curing is high, and the adhesive can be easily detached by ultraviolet irradiation.

In this regard, in the embodiments of the present invention, when the amount of the photoinitiation monomer was as low as 0.5 mol%, the adhesion reduction rate was less than 60% even when the integrated light dosage of ultraviolet irradiation was 10,000 $mJ/cm^2$ or more, whereas when it was 1 to 5 mol%, it was confirmed that adhesion decreased by 96% or more under the same light dosage conditions.

In the present invention, the photoinitiation system comprising the photocatalyst or the photoinitiator may have a property of absorbing light in a wavelength region of 300 to 800 nm.

In one embodiment of the present invention, a photocatalyst having a thermally activated delayed fluorescence (TADF) emission property may be used as the photoinitiation system, and the photocatalyst may have a property of absorbing light in a wavelength region of 400 to 800 nm. In the present invention, by applying the photoinitiation system comprising the photocatalyst and using it together with the photoinitiation monomer, an adhesive having excellent ultraviolet detachability can be prepared. At this time, the photocatalyst may form a photoinitiation system together with the co-initiator.

In a general fluorescence mechanism, three of the four excitons, which are triplet excitons, are quenched and light efficiency is not high, whereas according to the thermally activated delayed fluorescence mechanism, all four excitons emit light by transferring the three triplet excitons to the level of singlet excitons and causing them to emit light, thereby exhibiting a feature of very excellent light efficiency.

In the present invention, the photocatalyst may be a cyanoarene-based compound having a thermally activated delayed fluorescence property.

Specifically, the cyanoarene-based photocatalyst may be a compound represented by the following Chemical Formula 2:

[Chemical Formula 2]

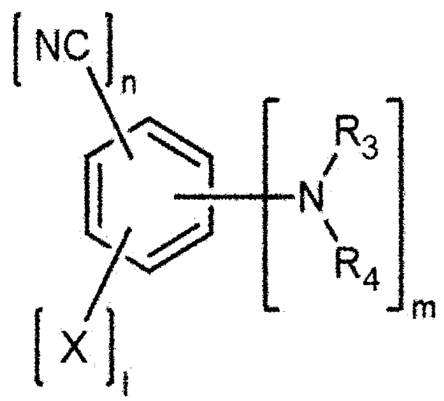

In Chemical Formula 2, $R_3$ and $R_4$ are each independently hydrogen, deuterium, a halogen atom, a nitro group ($-NO_2$), a cyano group (-CN), -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or are linked to each other to form a substituted or unsubstituted carbazole structure. Preferably, $R_3$ and $R_4$ are each independently a substituted or unsubstituted $C_6$-$C_{18}$ aryl, or are linked to each other to form a substituted or unsubstituted carbazole structure.

In Chemical Formula 2, X is a halogen atom selected from the group consisting of F, Cl, Br, and I, and is preferably F.

In Chemical Formula 2, n is 1 or 2, m is an integer of 3 to 5, and l is 0 or 1, and n + m + l is an integer of 4 to 6. Preferably, in Chemical Formula 2, n is 1 or 2, m is 3 or 4, l is 0 or 1, and n + m + l may be 5 or 6.

In one embodiment of the present invention, the photocatalyst of Chemical Formula 2 may be represented by the following Chemical Formula 3:

[Chemical Formula 3]

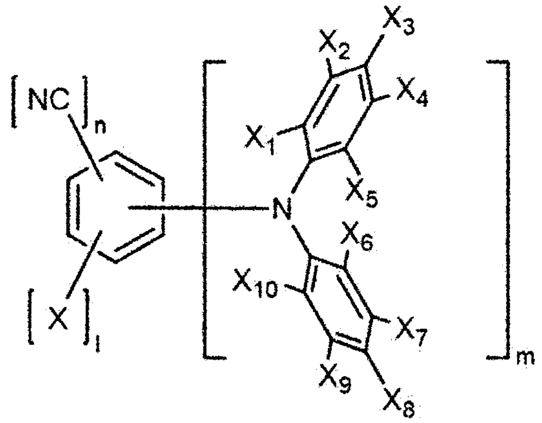

In Chemical Formula 3, $X_1$ to $X_{10}$ are each independently hydrogen, deuterium, a halogen atom, $-NO_2$, -CN, -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Preferably, $X_1$ to $X_{10}$ are each independently hydrogen, a halogen atom, a cyano group, or a substituted or unsubstituted $C_1$-$C_4$ alkyl or $C_1$-$C_4$ alkoxy.

In Chemical Formula 3, the definition of X and the definitions of n, m, and l are as defined in Chemical Formula 2.

In one embodiment of the present invention, the photocatalyst of Chemical Formula 2 may be represented by the following Chemical Formula 4:

[Chemical Formula 4]

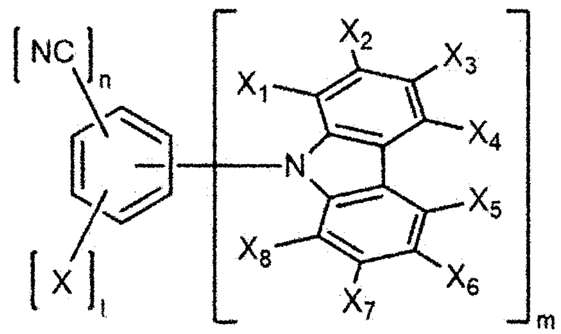

In Chemical Formula 4, $X_1$ to $X_8$ are each independently hydrogen, deuterium, a halogen atom, $-NO_2$, -CN, -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl. Preferably, $X_1$ to $X_8$ are each independently hydrogen, a halogen atom, a cyano group, or a substituted or unsubstituted $C_1$-$C_4$ alkyl or $C_1$-$C_4$ alkoxy.

In Chemical Formula 4, the definition of X and the definitions of n, m, and l are as defined in Chemical Formula 2.

In an exemplary embodiment of the present invention, as the photocatalyst, one or more of 2,4,5,6-tetrakis(diphenylamino)isophthalonitrile (4DP-IPN), 2,4,5,6-tetrakis(carbazol-9-yl)isophthalonitrile (4Cz-IPN), 2,4,5,6-tetrakis(3,6-di-tert-butylcarbazol-9-yl)isophthalonitrile (4tCz-IPN), 2,4,6-tris(diphenylamino)-5-fluoroisophthalonitrile (3DP-F-IPN), 2,4,6-tris(carbazol-9-yl)-5-fluoroisophthalonitrile (3Cz-F-IPN), 2,4,5,6-tetrakis(bis(4-methoxyphenyl)amino)isophthalonitrile (4DMDP-IPN), 2,4,5,6-tetrakis(bis(4-cyanophenyl)amino)isophthalonitrile (4DCDP-IPN), and 2,3,5,6-tetrakis(diphenylamino)benzonitrile (4DP-BN) may be used. Preferably, 4DP-IPN or 4Cz-IPN may be used as the photocatalyst.

The structures of each of the above exemplary compounds can be represented as follows.

[4DP-IPN]

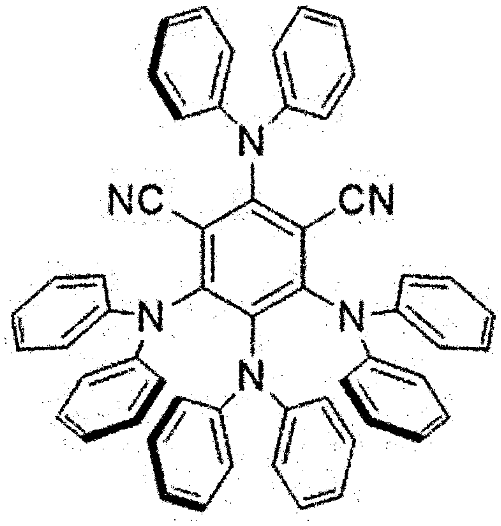

[4Cz-IPN]

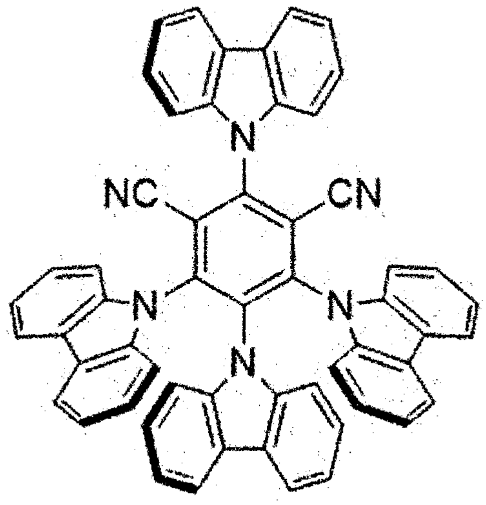

[4tCz-IPN]

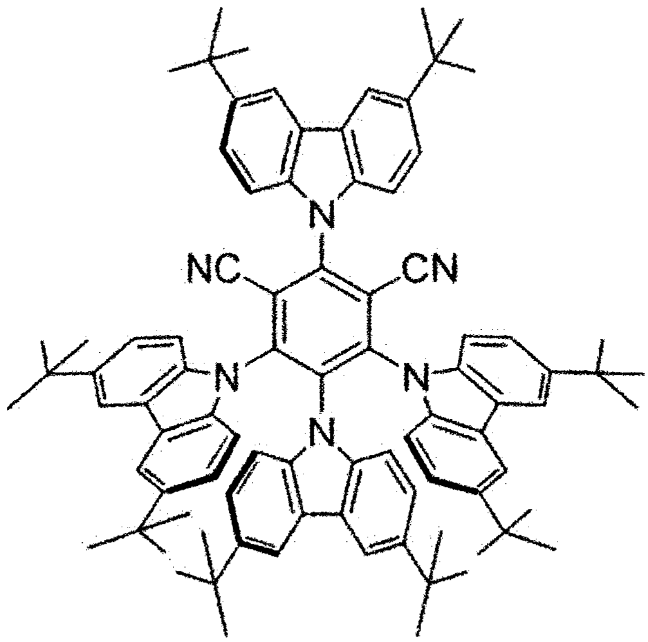

[3DP-F-IPN]

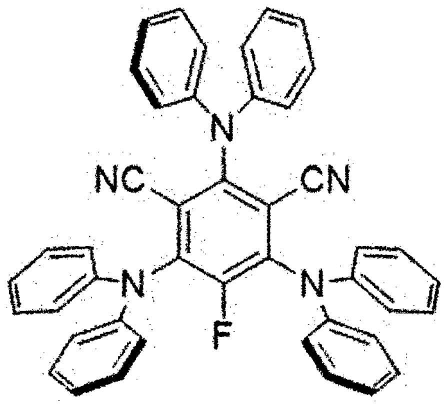

[3Cz-F-IPN]

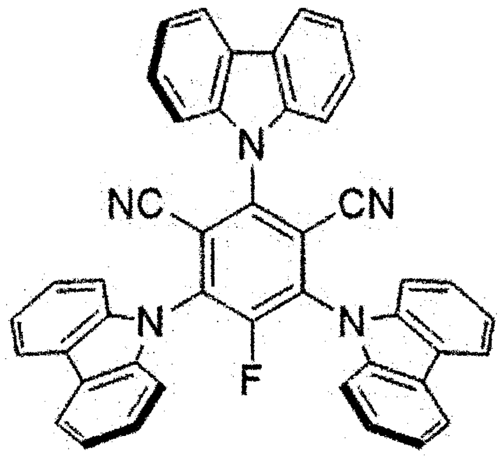

[4DMDP-IPN]

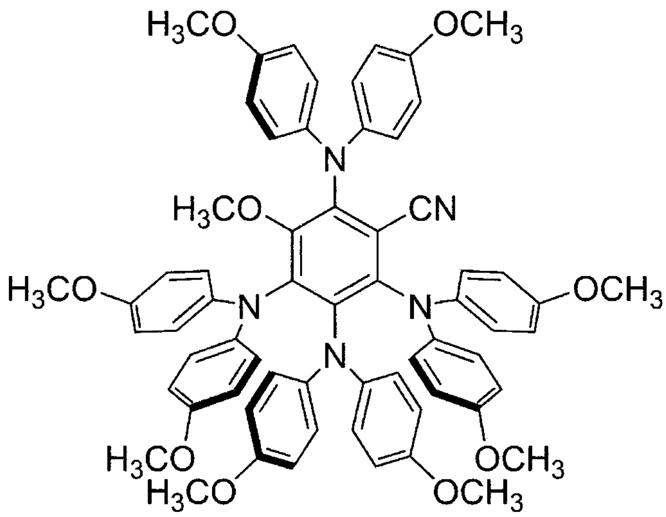

[4DCDP-IPN]

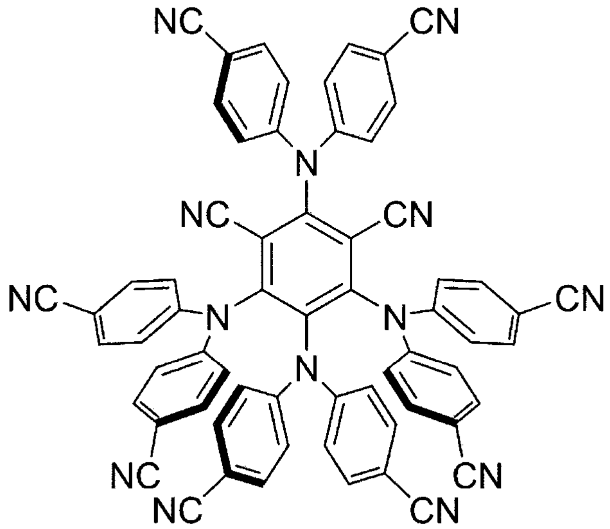

[4DP-BN]

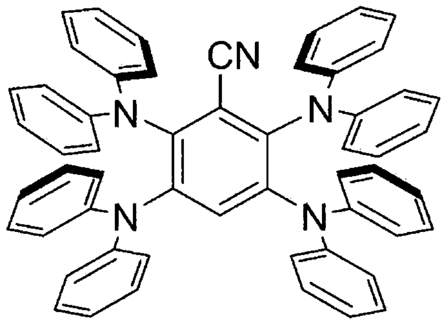

In one embodiment of the present invention, instead of the cyanoarene-based photocatalyst, another photocatalyst that absorbs light in the visible light region of a wavelength of 400 to 800 nm may be used.
For example, as the photocatalyst in the present invention, one or more may be used selected from the group consisting of camphorquinone; bis(4-methoxybenzoyl)diethylgermanium; 5-amino-2-benzyl-1H-benzo[de]isoquinoline [1,3(2H)-dione]; zinc tetraphenylporphyrin; 2,6-bis(triphenylamine)dithieno[3,2-b:2',3'-d]phosphole oxide; tris(2,2-bipyridyl)dichlororuthenium(II)hexahydrate; tris[2-phenylpyridine]iridium; Irgacure 784; Irgacure 819; 2-mercaptothioxanthone; 2-thioxanthone-thioacetic acid; 2-(carboxymethoxy)thioxanthone; thioxanthone-fluorenecarboxylic acid; and thioxanthone-anthracene.
In the ultraviolet detachable adhesive composition of the present invention, the amount of the photocatalyst used may be 0.00001 to 0.01 mol relative to 100 mol of the polymerizable monomer, and, for example, may be 0.0001 to 0.005 mol. In this way, by using the present invention, photopolymerization can be efficiently performed even with a very small amount of photocatalyst relative to the monomer.
In the ultraviolet detachable adhesive composition of the present invention, the co-initiator used together with the photocatalyst is an ionic substance that induces a polymerization reaction of monomers by forming radicals through a dissociation mechanism. In the present invention, when a photoinitiation system is formed by using the photocatalyst, particularly a cyanoarene-based photocatalyst having a thermally activated delayed fluorescence property, in combination with the co-initiator, and this is used in combination with the photoinitiation monomer, an adhesive composition can be provided which is cured by visible light and is detachable by ultraviolet irradiation.
In the photoinitiation system used in the present invention, the photocatalyst, after absorbing light, forms a triplet excited state very efficiently through intersystem crossing between a singlet state and a triplet state. This excited-state photocatalyst can generate a radical ion species of the co-initiator through an oxidation-reduction reaction with the co-initiator, and the radical ion co-initiator generated by electron transfer can form a highly reactive alkyl or aryl radical when participating in polymerization of a polymer through a bond dissociation reaction.
In one embodiment of the present invention, the co-initiator used together with the photocatalyst may be

classified into a co-initiator I and a co-initiator II, and these may be used alone or in combination, and preferably may be used in combination.

In the present invention, the co-initiator I and the co-initiator II may be tertiary amine compounds. The tertiary amine co-initiator not only serves as an initiator that generates an amino radical through electron transfer with the photocatalyst, but also serves as a crosslinking agent and an oxygen scavenger.

In the present invention, the co-initiator I may be represented by Chemical Formula 5:

[Chemical Formula 5]

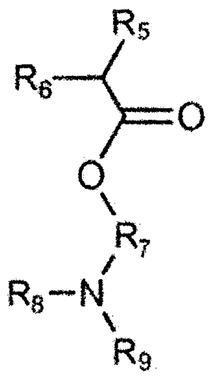

In Chemical Formula 5, $R_5$ and $R_6$ are each independently hydrogen, deuterium, or a substituted or unsubstituted $C_1$-$C_{12}$ alkyl, $R_7$ is absent or a substituted or unsubstituted $C_1$-$C_{12}$ alkyl, and $R_8$ and $R_9$ are each independently a substituted or unsubstituted $C_1$-$C_{12}$ alkyl.

For example, the co-initiator I may comprise one or more acetate compounds selected from the group consisting of 2-(dimethylamino)ethyl acetate, 2-(diethylamino)ethyl acetate, 3-(dimethylamino)-2,2-dimethylpropyl acetate, 2-(tert-butylamino)ethyl acetate, 2-(dimethylamino)propyl acetate, 4-(dimethylamino)butyl acetate, 5-(dimethylamino)pentyl acetate, 6-(dimethylamino)hexyl acetate, 7-(dimethylamino)heptyl acetate, 8-(dimethylamino)octyl acetate, 9-(dimethylamino)nonyl acetate, and 10-(dimethylamino)decyl acetate.

In addition, the co-initiator II may be represented by Chemical Formula 6:

[Chemical Formula 6]

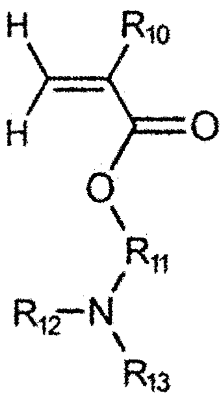

In Chemical Formula 6, $R_{10}$ is hydrogen, deuterium, a halogen atom, or a substituted or unsubstituted $C_1$-$C_{12}$ alkyl, $R_{11}$ is absent, or a substituted or unsubstituted $C_1$-$C_{12}$ alkyl, and $R_{12}$ and $R_{13}$ are each independently a substituted or unsubstituted $C_1$-$C_{12}$ alkyl.

For example, the co-initiator II may comprise one or more acrylate compounds selected from the group consisting of 2-(dimethylamino)ethyl (meth)acrylate, 2-(diethylamino)ethyl (meth)acrylate, 3-(dimethylamino)-2,2-dimethylpropyl (methyl)acrylate, 2-(tert-butylamino)ethyl (meth)acrylate, 2-(dimethylamino)propyl (meth)acrylate, 4-(dimethylamino)butyl (meth)acrylate, 5-(dimethylamino)pentyl (meth)acrylate, 6-(dimethylamino)hexyl (meth)acrylate, 7-(dimethylamino) heptyl (meth)acrylate, 8-(dimethylamino)octyl (meth)acrylate, 9-(dimethylamino)nonyl (meth)acrylate, and 10-(dimethylamino)decyl (meth)acrylate.

In one embodiment of the present invention, the co-initiator used together with the photocatalyst may be classified into a co-initiator III and a co-initiator IV, and these may be used alone or in combination, and preferably may be used in combination.

In one embodiment of the present invention, the co-initiator III may comprise an anionic co-initiator, and specifically may comprise one or more borate salts.

As the co-initiator III, a compound may be used having a structure in which one or more substituted or unsubstituted $C_4$-$C_{18}$ aryl groups are bonded to a boron atom of the borate salt. Specifically, the anionic co-initiator may be represented by the following Chemical Formula 7:

[Chemical Formula 7]

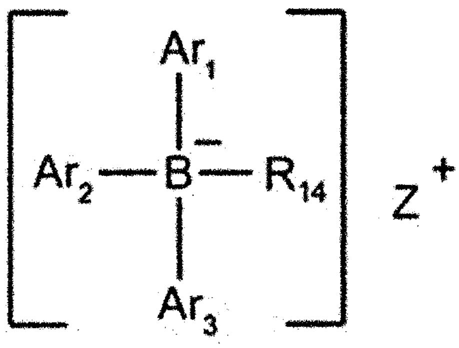

In Chemical Formula 7, $R_{14}$ is a $C_1$-$C_{24}$ alkyl or $-CH_2SiR'_3$ (R' is hydrogen or a $C_1$-$C_{24}$ alkyl), and is preferably a $C_1$-$C_6$ alkyl. In addition, $Ar_1$ to $Ar_3$ are each independently a substituted or unsubstituted $C_4$-$C_{18}$ aryl, and may preferably be a substituted or unsubstituted $C_6$-$C_{12}$ aryl.

In addition, $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion.

In one embodiment of the present invention, the co-initiator III may comprise a co-initiator having the structure of the following Chemical Formula 8:

[Chemical Formula 8]

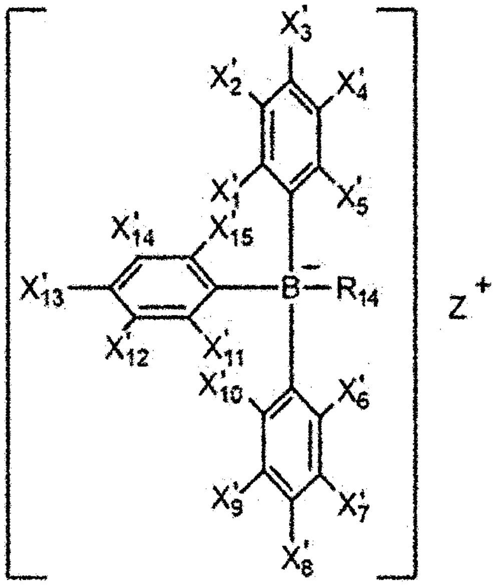

In Chemical Formula 8, $R_{14}$ is a $C_1$-$C_{24}$ alkyl or -$CH_2SiR'_3$, and R' is hydrogen or a $C_1$-$C_{24}$ alkyl. Preferably, $R_{14}$ may be a $C_1$-$C_6$ alkyl.

In Chemical Formula 8, $X'_1$ to $X'_{15}$ are each independently hydrogen, deuterium, a halogen atom, -$NO_2$, -CN, -COOR, -$NRCOCH_3$, -SR, -$COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, R is hydrogen or a $C_1$-$C_{24}$ alkyl, and x is an integer of 0 to 2. Preferably, $X'_1$ to $X'_{15}$ may each independently be hydrogen or a substituted or unsubstituted $C_1$-$C_4$ alkyl.

In Chemical Formula 8, $Z^+$ is $Li^+$, $K^+$, $Na^+$, $Rb^+$, or a substituted or unsubstituted safranin ion, pyrylium ion, cyanine ion, iodonium ion, sulfonium ion, phosphonium ion, or ammonium ion, and may preferably be an ammonium ion.

In an exemplary embodiment of the present invention, as the co-initiator III, one or more borate salts selected from the group consisting of [2-(butanoyloxy)ethyl]trimethylazanium butyltriphenylborate, tetrabutylammonium butyltriphenylborate, tetramethylammonium methyl(biphenyl)dimesitylborate, tetramethylammonium methyl(1-naphthyl)dimesitylborate, tetrabutylammonium butyltrinaphthylborate, tetramethylammonium butyl(1-naphthyl)dimesitylborate, tetradodecylammonium methyl(1-naphthyl)dimesitylborate, tetramethylammonium methyl(1-naphthyl)dimesitylborate, tetramethylammonium butyl(1-naphthyl)dichloromesitylborate, cyanine butyl(1-naphthyl)dichloromesitylborate, tetramethylammonium methyl(2-naphthyl)dimesitylborate, tetramethylammonium butyl(2-naphthyl)dimesitylborate, tetramethylammonium methyl(9-anthracyl)bis(2-methylphenyl)borate, tetramethylammonium butyl(9-anthracyl)bis(2-methylphenyl)borate, tetramethylammonium butyl(9-phenanthryl)dimesitylborate, tetramethylammonium butyl(9-phenanthryl)dichloromesitylborate, tetramethylammonium butyl(9-phenanthryl)bis(dichloromesityl)borate, tetramethylammonium butyl(1-pyrenyl)dimesitylborate, tetramethylammonium butyl(1-pyrenyl)dichloromesitylborate, tetramethylammonium methyl(biphenyl)bis(dichloromesityl)borate, iodonium hexyltris(3-fluorophenyl)borate, pyrylium hexyltris(3-fluorophenyl)borate, and safranine hexyltris(3-fluorophenyl)borate may be used.

In one embodiment of the present invention, the co-initiator IV may comprise one or more compounds selected from the group consisting of an iodonium salt, a sulfonium salt, and a phosphonium salt.

Specifically, as the co-initiator IV, a cationic co-initiator may be used having a structure in which one or more substituted or unsubstituted aryl groups are bonded to the central atom iodine (I), sulfur (S), or phosphorus (P) of the iodonium salt, the sulfonium salt, and the phosphonium salt, respectively. The iodonium salt, the sulfonium salt, and the phosphonium salt co-initiators may each be represented by Chemical Formulas 9 to 11:

[Chemical Formula 9]

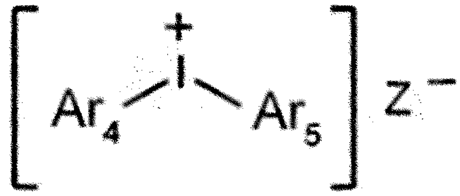

[Chemical Formula 10]

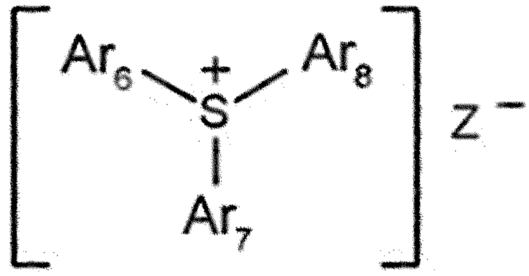

[Chemical Formula 11]

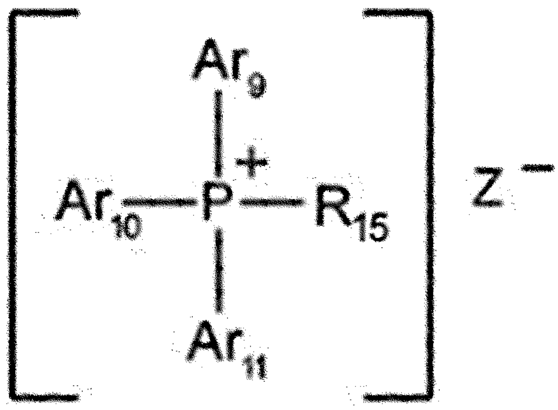

In Chemical Formulas 9 to 11, $Ar_4$ to $Ar_{11}$ are each independently a substituted or unsubstituted $C_4$-$C_{18}$ aryl, and may preferably be a substituted or unsubstituted $C_6$-$C_{12}$ aryl.

In addition, in Chemical Formula 11, $R_{15}$ is hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, and R is hydrogen or a $C_1$-$C_{24}$ alkyl, and x is an integer of 0 to 2.

In Chemical Formulas 9 to 11, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_6$-$C_{10}$ arylsulfonate, camphorsulfonate, a $C_1$-$C_{20}$ perfluoroalkylsulfonylmethide or a $C_1$-$C_{20}$ perfluoroalkylsulfonylimide ion.

In one embodiment of the present invention, the iodonium salt co-initiator may be a compound of Chemical Formula 12:

[Chemical Formula 12]

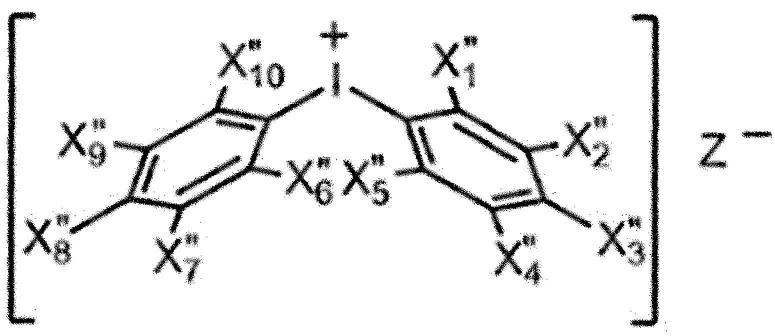

In Chemical Formula 12, $X"_1$ to $X"_{10}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, and R is hydrogen or a $C_1$-$C_{24}$ alkyl, and x is an integer of 0 to 2.

In Chemical Formula 12, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, a $C_1$-$C_{20}$ perfluoroalkylsulfonylmethide or a $C_1$-$C_{20}$ perfluoroalkylsulfonylimide ion.

In an exemplary embodiment of the present invention, as the iodonium salt co-initiator, one or more compounds selected from the group consisting of diphenyliodonium hexafluorophosphate, (4-methylphenyl)(4-(2-methylpropyl) phenyl)iodonium hexafluorophosphate, bis(4-methylphenyl)iodonium hexafluorophosphate, bis(dodecylphenyl)iodonium hexafluorophosphate, bis(4-hexylphenyl)iodonium hexafluoroantimonate, bis(4-hexylphenyl)iodonium hexafluorophosphate, (4-hexylphenyl)phenyliodonium hexafluoroantimonate, (4-hexylphenyl)phenyliodonium hexafluorophosphate, [4-(octyloxy)phenyl](phenyl)iodonium hexafluoroantimonate, bis(4-octylphenyl)iodonium hexafluoroantimonate, (4-sec-butylphenyl)-(4'-methylphenyl)iodonium hexafluorophosphate, (4-iso-propylphenyl)-(4'-methylphenyl)iodonium hexafluorophosphate, bis(4-octylphenyl)iodonium hexafluorophosphate, (4-octylphenyl)phenyliodonium hexafluoroantimonate, (4-octylphenyl)phenyliodonium hexafluorophosphate, bis(4-decylphenyl)iodonium hexafluoroantimonate, bis(4-decylphenyl)iodonium hexafluorophosphate, (4-decylphenyl)phenyliodonium hexafluoroantimonate, (4-decylphenyl)phenyliodonium hexafluorophosphate, bis(4-hexylphenyl)iodonium tetrafluoroborate, (4-hexylphenyl)phenyliodonium tetrafluoroborate, bis(4-oxylphenyl)iodonium tetrafluoroborate, (4-octylphenyl)phenyliodonium tetrafluoroborate, bis(4-decylphenyl)iodonium tetrafluoroborate, (4-decylphenyl)phenyliodonium tetrafluoroborate, bis(4-methoxyphenyl) iodonium bromide, (4-methoxyphenyl)phenyliodonium trifluoromethanesulfonate, bis(4-phenoxyphenyl)iodonium tetrafluoroborate, bis(3-methoxysulfonylphenyl)iodonium hexafluorophosphate, bis(4-fluorophenyl)iodonium trifluoromethanesulfonate, bis(4-bromophenyl)iodonium trifluoromethanesulfonate, bis(4-chlorophenyl)iodonium hexafluorophosphate, bis(2,4-dichlorophenyl)iodonium hexafluorophosphate, bis(4-iodophenyl)iodonium tetrafluoroborate, di(3-carboxyphenyl)iodonium hexafluorophosphate, di(3-methoxycarbonylphenyl)iodonium hexafluorophosphate, di(4-acetamidophenyl)iodonium hexafluorophosphate, (4-nitrophenyl)phenyliodonium nitrate, bis(3-nitrophenyl)iodonium nitrate, and dinaphthyliodonium tetrafluoroborate may be used.

In one embodiment of the present invention, the sulfonium salt co-initiator may be a compound of Chemical Formula 13:

[Chemical Formula 13]

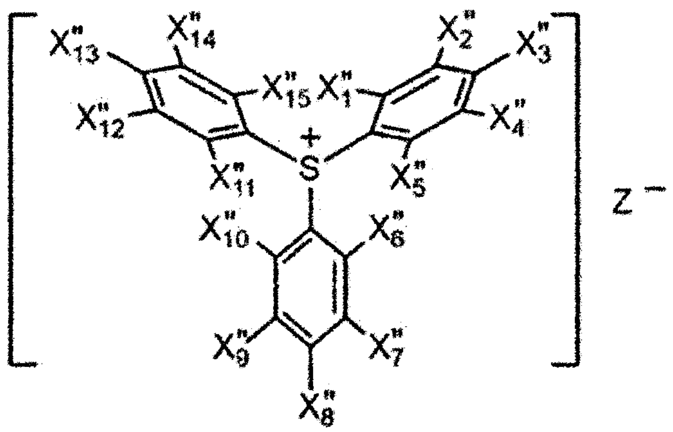

In Chemical Formula 13, $X''_1$ to $X''_{15}$ are each independently hydrogen, deuterium, a halogen atom, $-NO_2$, -CN, -COOR, $-NRCOCH_3$, -SR, $-COONH_xR_{2-x}$, $-NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, and R is hydrogen or a $C_1$-$C_{24}$ alkyl, and x is an integer of 0 to 2.

In Chemical Formula 13, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO_4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, a $C_1$-$C_{20}$ perfluoroalkylsulfonylmethide or a $C_1$-$C_{20}$ perfluoroalkylsulfonylimide ion.

In an exemplary embodiment of the present invention, as the sulfonium salt co-initiator, one or more may be used selected from the group consisting of triphenylsulfonium hexafluoroantimonate, triphenylsulfonium hexafluorophosphate, and diphenyl-4-methylsulfonium trifluoromethanesulfonate.

In one embodiment of the present invention, the phosphonium salt co-initiator may be a compound of Chemical Formula 14:

[Chemical Formula 14]

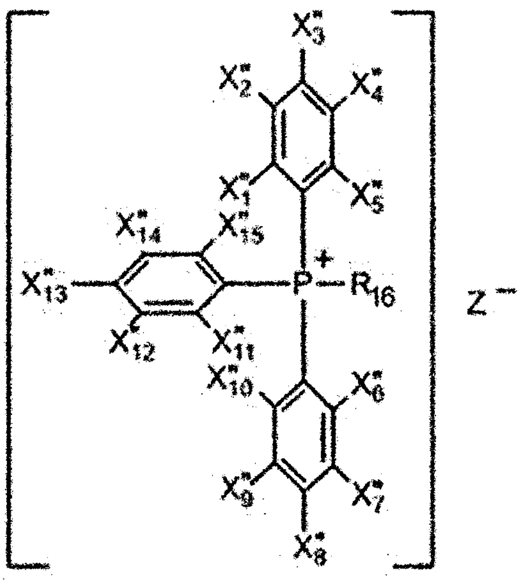

In Chemical Formula 14, $R_{16}$ and $X"_1$ to $X"_{15}$ are each independently hydrogen, deuterium, a halogen atom, $-NO_2$, -CN, -COOR, $-NRCOCH_3$, -SR, $-COONH_xR_{2-x}$, $NH_xR_{2-x}$, or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, and R is hydrogen or a $C_1$-$C_{24}$ alkyl, and x is an integer of 0 to 2.

In Chemical Formula 14, $Z^-$ is $PF_6^-$, $SbF_6^-$, $AsF_6^-$, $BF_4^-$, $(C_6F_5)_4B^-$, $Cl^-$, $Br^-$, $HSO_4^-$, $CF_3SO_3^-$, $FSO_3^-$, $CH_3SO_3^-$, $ClO_4^-$, $PO_4^-$, $NO_3^-$, $SO_4^-$, $CH_3SO4^-$, or a substituted or unsubstituted $C_1$-$C_{20}$ alkylsulfonate, $C_2$-$C_{20}$ haloalkylsulfonate, $C_4$-$C_{10}$ arylsulfonate, camphorsulfonate, a $C_1$-$C_{20}$ perfluoroalkylsulfonylmethide or a $C_1$-$C_{20}$ perfluoroalkylsulfonylimide ion.

In an exemplary embodiment of the present invention, one or more may be used as the phosphonium salt co-initiator selected from the group consisting of ethyltriphenylphosphonium hexafluoroantimonate and tetraphenylphosphonium hexafluoroantimonate.

In the present invention, the molar ratio of the photocatalyst to the entire co-initiator may be 1:10 to 1:5,000.

In one embodiment of the present invention, the photoinitiator may be used as the photoinitiation system.

The photoinitiator used in the present invention has a property of absorbing light in the wavelength range of 300 to 600 nm to initiate the curing reaction, and particularly preferably has a property of absorbing light in the wavelength range of 380 to 460 nm, which is in the visible light region.

The photoinitiator may be classified into a Norrish type I photoinitiator and a Norrish type II photoinitiator. The Norrish reaction is a photochemical reaction occurring at a carbonyl, wherein the Norrish type I reaction is a reaction in which cleavage occurs at the alpha position of a carbonyl compound to generate two free radical intermediates, and the Norrish type II reaction is a reaction in which, in the presence of a hydrogen donor, a gamma-hydrogen is photochemically abstracted by an excited-state carbonyl compound to generate a 1,4-biradical.

In one embodiment of the present invention, the photoinitiator may be a Norrish type I photoinitiator. As the Norrish type I photoinitiator, one or more may be used selected from the group consisting of acylphosphine oxide-based photoinitiator, acetophenone-based photoinitiator, benzoin-based photoinitiator, and benzoin ether-based photoinitiator, and from the standpoint of absorption wavelength and use in combination with the photoinitiation monomer, it is preferable to use an acylphosphine oxide photoinitiator.

In the present invention, the Norrish type I photoinitiator may be a compound represented by Chemical Formula 15:

[Chemical Formula 15]

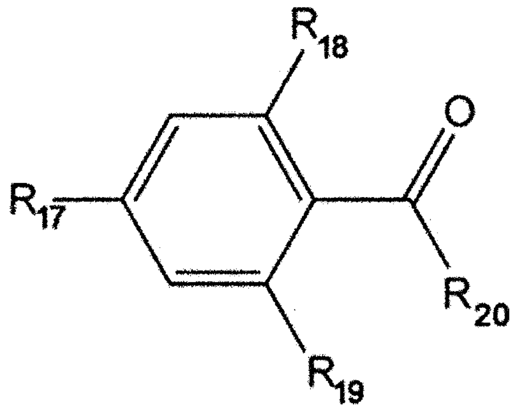

In Chemical Formula 15,

$R_{17}$, $R_{18}$, and $R_{19}$ are each independently hydrogen, deuterium, or a substituted or unsubstituted $C_1$-$C_{24}$ alkyl, $C_2$-$C_{24}$ alkenyl, $C_2$-$C_{24}$ alkynyl, $C_4$-$C_{18}$ aryl, a mercapto group (-SH), a hydroxyl group (-OH), an alkylthio group (-SR), or an alkoxy group (-OR), and

$R_{20}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, a phosphine oxide group, a phosphinate group, an amine group, or a morpholino group.

In an exemplary embodiment of the present invention, one or more may be used as the photoinitiator selected from the group consisting of 2-hydroxy-1-(4-(4-(2-hydroxy-2-methylpropanoyl)benzyl)phenyl)-2-methylpropan-1-one (Irgacure 127), 1-hydroxycyclohexylphenyl ketone (Irgacure 184), 2-benzyl-2-dimethylamino-4'-morpholinobutyrophenone (Irgacure 369), 2,2-dimethoxy-1,2-diphenylethan-1-one (Irgacure 651), bis(2,4,6-trimethylbenzoyl)-phenylphosphine oxide (Irgacure 819), 2,4,6-trimethylbenzoyl-diphenylphosphine oxide (Irgacure TPO), ethyl(2,4,6-trimethylbenzoyl)-phenylphosphinate (Irgacure TPO-L), 2-dimethylamino-2-(4-methyl-benzyl)-1-(4-morpholin-4-yl-phenyl)-butan-1-one (Irgacure 379), 2-methyl-1(4-(methylthio)phenyl)-2-morpholinopropan-1-one (Irgacure 907), 2-hydroxy-2-methyl-1-phenyl-propan-1-one (Irgacure 1173), and 1-(4-(2-hydroxyethoxy)-phenyl)-2-hydroxy-2-methyl-1-propene-1-one (Irgacure 2959). Preferably, Irgacure 819 or Irgacure TPO may be used as the photoinitiator.

The structures of each of the above exemplary compounds can be represented as follows.

[Irgacure 127]

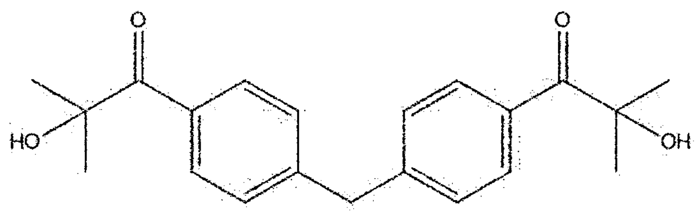

[Irgacure 184]

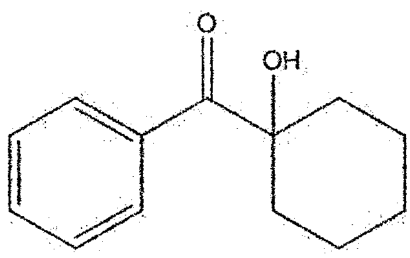

[Irgacure 651]

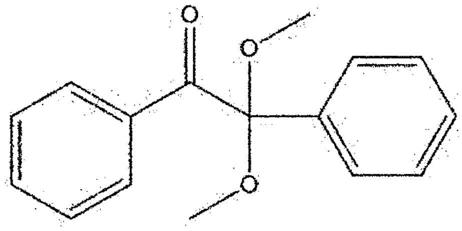

[Irgacure 819]

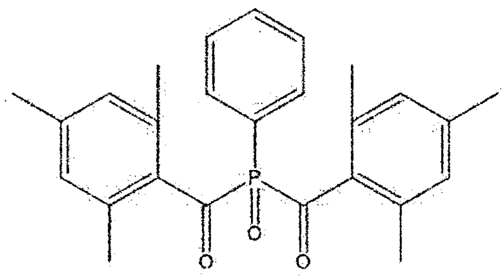

[Irgacure TPO]

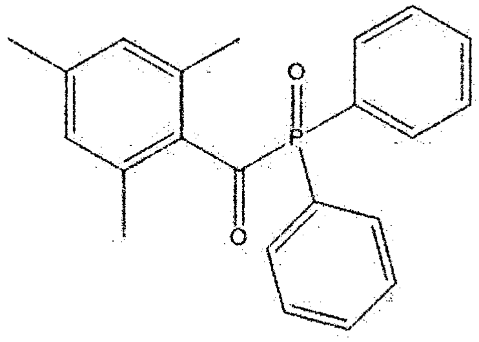

[Irgacure TPO L]

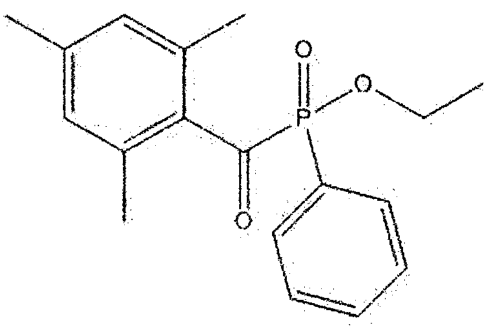

In one embodiment of the present invention, the photoinitiator may be a compound that undergoes a Norrish type II reaction with the co-initiator (a Norrish type II photoinitiator).

As the Norrish type II photoinitiator, one or more may be used selected from the group consisting of thioxanthone-based photoinitiator, benzophenone-based photoinitiator, and camphorquinone-based photoinitiator.

In the present invention, the Norrish type II photoinitiator may be a compound represented by Chemical Formula 16 below:

[Chemical Formula 16]

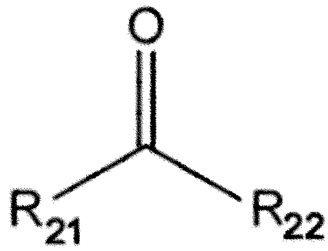

In Chemical Formula 16,

$R_{21}$ and $R_{22}$ are each independently substituted or unsubstituted $C_1$-$C_{24}$ alkyl, $C_2$-$C_{24}$ alkenyl, $C_2$-$C_{24}$ alkynyl, or $C_4$-$C_{18}$ aryl;

$R_{21}$ and $R_{22}$ may exist independently, or one or more atoms of $R_{21}$ and $R_{22}$ may be linked to each other to form a ring. In this case, the ring may be a 5- to 7-membered alicyclic, aromatic, or heterocyclic ring and may include 1 to 3 fused rings.

For example, the Norrish type II photoinitiator may include one or more of 2,3-bomanedione (camphorquinone), thioxanthone, 2-isopropylthioxanthone (Irgacure ITX), 2,4-diethyl-9H-thioxanthen-9-one (DETX), benzophenone, 4-phenylbenzophenone, methyl-2-benzoylbenzoate, and 1-(4-((4-benzoylphenyl)thio)phenyl)-2-methyl-2-((4-methylphenyl)sulfonyl)-1-propanone. Preferably, the photoinitiator may be camphorquinone, benzophenone, or thioxanthone.

The structures of the above exemplary compounds are shown below.

[Camphorquinone]

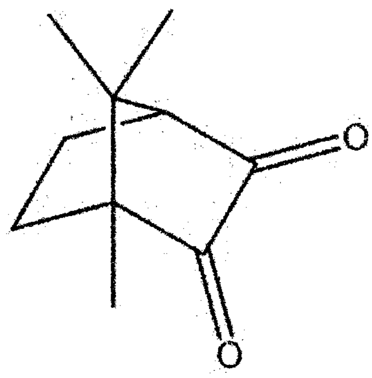

[Benzophenone]

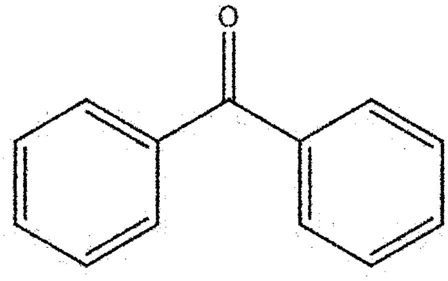

[Thioxanthone]

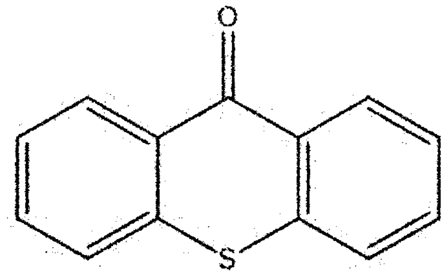

In the ultraviolet detachable adhesive composition of the present invention, the molar amount of the photoinitiator may be 10 to $10^6$ ppm based on the total moles of monomers (that is, the total amount of the polymerizable monomer and the photoinitiation monomer), and preferably $10^2$ to $10^4$ ppm. Within the above range, the adhesive can be effectively cured upon irradiation with light.

In one embodiment of the present invention, the photoinitiator may be used together with a co-initiator. In this case, by using a photoinitiation system formed by combining the photoinitiator and the co-initiator, it is possible to provide an adhesive composition that is cured by visible light and is detachable upon ultraviolet irradiation.

Preferably, the co-initiator used together with the photoinitiator may include an amine-based co-initiator, and the amine-based co-initiator may be represented by Chemical Formula 17 below:

[Chemical Formula 17]

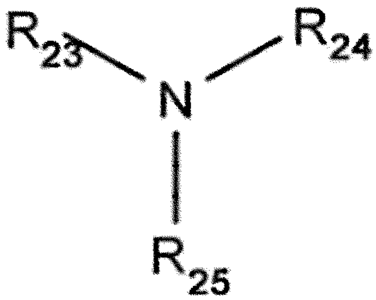

In Chemical Formula 17, $R_{23}$, $R_{24}$, and $R_{25}$ are each independently hydrogen, deuterium, $NH_xR''_{2-x}$, -OR", -COR", -COOR", or substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl, and R" is hydrogen or $C_1$-$C_{24}$ alkyl, and x is an integer from 0 to 2.

In an exemplary embodiment of the present invention, the amine-based co-initiator may include one or more compounds selected from: primary amines such as methylamine, ethylamine, propylamine, butylamine, pentylamine, hexylamine, octylamine, nonylamine, decylamine, 1-methyl-n-pentylamine, 1-ethyl-n-butylamine, (1-methyl-3-methylbutyl)amine, (1-methyl-2-methylbutyl)amine, (1-ethyl-2-methylpropyl)amine, (1,1-dimethylbutyl)amine, and (1-ethyl-1-methylpropyl)amine; secondary amines such as dimethylamine, ethylmethylamine, butylethylamine, and (ethyl-1-methylbutyl)amine; tertiary amines such as triethylamine, N,N-diisopropylethylamine, butylethylmethylamine, and (diethyl-1,2,3-trimethylbutyl)amine; and other amines such as 2-(dimethylamino)ethyl acrylate, 2-(dimethylamino)ethyl acetate, 2-(dimethylamino)ethyl methacrylate, 2-(dimethylamino)ethyl methacrylate, aniline, and dimethylbenzylamine.

If necessary, one or more additional co-initiators may further be used as the co-initiator, such as an anionic co-initiator including a borate salt, or a cationic co-initiator including an iodonium salt, a sulfonium salt, or a phosphonium salt.

In the present invention, the co-initiator may be used in combination with the Norrish type II photoinitiator to generate a 1,4-biradical, thereby curing the adhesive through a photoinitiation reaction. In this case, the molar ratio of the Norrish type II photoinitiator to the co-initiator may be 1:2 to 1: 1,000.

The adhesive composition of the present invention may further comprise, in addition to the above components, one or more additional components such as a radical-curable component, a photosensitizer, and a UV absorber, as needed.

Generally, when an adhesive composition is cured to prepare an adhesive resin, it is difficult to remove the adhesive due to high adhesion strength, and there is a problem in that expensive equipment and processes such as heat

treatment are required for removal. In the present invention, by applying a photoinitiation system and a photoinitiation monomer to the adhesive composition, it is possible to produce an adhesive that is cured by visible light and, upon ultraviolet irradiation, exhibits a significantly reduced adhesion such that it can be easily peeled from a substrate. In addition, the adhesive composition of the present invention has excellent transparency and can be advantageously applied as an optically clear adhesive (OCA) used in displays.

By irradiating the ultraviolet detachable adhesive composition of the present invention with visible light, an adhesive resin can be obtained, and when the composition is applied in the form of a film and then irradiated with visible light, an adhesive film (or adhesive layer) can be formed.

Specifically, when the adhesive composition is irradiated with visible light, polymerization of the monomers occurs by the photocatalyst or photoinitiator, thereby preparing a cured resin.

The method for preparing an adhesive resin according to the present invention comprises irradiating the adhesive composition of the present invention with visible light to polymerize the monomers and thereby prepare an adhesive resin.

A bulk polymer resin can be obtained by irradiating the composition with visible light in the mixed state, or an adhesive resin in the form of a film (that is, an adhesive film or adhesive layer) can be prepared by applying the mixture to a substrate and then irradiating it with visible light. In this case, a method may be employed in which the mixture is applied onto a release liner, and after resin formation, the release liner is removed to obtain a film, or a film may be formed by directly applying the mixture onto a target to which the film is to be applied.

In the present invention, it is preferable to further comprise degassing with nitrogen gas before irradiating the mixture with visible light.

In the visible light irradiation step, the wavelength range of the visible light may be 400 to 600 nm, preferably 380 to 460 nm. The light irradiation may be performed for 1 second or more, for example, for 1 minute to 1 hour. The irradiation time may vary depending on the type of the photoinitiation system; when a photocatalyst is used, light irradiation may be performed for 10 to 50 minutes, preferably 20 to 40 minutes, and when a photoinitiator is used, light irradiation may be performed for 1 second to 10 minutes, preferably 1 second to 5 minutes.

In one embodiment of the present invention, the light irradiation dosage in the visible light irradiation step may be 200 to 20,000 $mJ/cm^2$, preferably 500 to 10,000 $mJ/cm^2$, and more preferably 3,000 to 10,000 $mJ/cm^2$. When visible light within the above range is irradiated, the conversion rate to the adhesive resin by visible light is excellent, which is preferable.

In relation thereto, in the Examples of the present invention, when the visible light irradiation dosage was adjusted to 600 $mJ/cm^2$ or more, a conversion rate of 90% or more was obtained, and when the irradiation dosage was adjusted to 3,000 $mJ/cm^2$ or more, a conversion rate reaching 100% was obtained.

In the visible light irradiation step, the light irradiation intensity may be 1 $mW/cm^2$ to 1 $W/cm^2$, preferably 10 to 100 $mW/cm^2$. If the intensity of the irradiated light is too low, the polymerization reaction may not be properly initiated, and if the intensity of the light is too high, the concentration of radicals generated from the co-initiators increases sharply in the early stage of the polymerization reaction, so that the termination reaction between radicals becomes dominant over the polymerization rate, thereby interfering with the polymerization reaction.

In one embodiment of the present invention, a resin having further improved polymerization rate can be prepared by additionally irradiating the prepared resin with visible light. Specifically, a film resin with an improved degree of polymerization can be prepared by additionally irradiating visible light after applying the bulk resin prepared by the light irradiation onto a substrate, or by additionally irradiating visible light onto the resin in film form prepared by the light irradiation.

When a film-type adhesive resin is prepared using a bulk resin, the bulk resin prepared before additional visible light irradiation is applied to a substrate. For example, a uniform film can be formed by applying the bulk resin onto a release liner and then adjusting the thickness using a micro-applicator.

At this time, the thickness of the resin before the additional light irradiation may be 1 $\mu m$ to 8 mm. The thickness may be adjusted as needed, however, when the thickness is too small, it is difficult to form a uniform coating, and when the thickness is too large, the degree of polymerization decreases, so that a thickness of 10 $\mu m$ to 2 mm is preferable, and in terms of coating workability and degree of polymerization, a thickness of 40 to 80 $\mu m$ is more preferable.

In the additional visible light irradiation step, the light irradiation may be performed for 10 seconds to 1 hour, for example, for 20 seconds to 10 minutes. By the additional light irradiation, it is possible to prepare a film resin having a very excellent degree of polymerization.

The adhesive resin prepared according to the present invention can be peeled by ultraviolet irradiation. Accordingly, the present invention can also provide a method of peeling off an adhesive film by irradiating the adhesive film with ultraviolet light.

In the present invention, the wavelength range of the ultraviolet light irradiated during peeling of the adhesive may be 100 to 400 nm, and the integrated light dosage of the ultraviolet light may be 500 to 50,000 $mJ/cm^2$.

Preferably, the integrated light dosage upon ultraviolet irradiation may be 1,000 to 30,000 $mJ/cm^2$, and more

preferably 2,000 to 8,000 $mJ/cm^2$. In relation thereto, in the Examples of the present invention, it was confirmed that, when the light dosage was too low, the adhesion reduction rate was low, whereas when the integrated light dosage was 3,000 $mJ/cm^2$ or more based on a photoinitiation monomer amount of 3 mol%, the adhesion decreased by 90% or more. As such, in the present invention, effective peeling is possible even without irradiating ultraviolet light at an excessively high light dosage.

As described above, when the adhesive of the present invention is cured by visible light and then the cured resin is irradiated with ultraviolet light, the adhesion is greatly reduced, so that the adhesive can be peeled by a simple method without damaging the adherend. Therefore, the present invention can be advantageously applied to reuse and recycle high-cost components such as UTG. In addition, since the adhesive composition of the present invention has high visible light transmittance, it can be advantageously used as an optically clear adhesive (OCA).

## Example

The invention will now be described in further detail with reference to the following Examples. However, these Examples are provided merely to illustrate certain experimental methods and configurations of the invention, and the scope of the present invention is not limited thereto.

### Preparation Example 1: Preparation of the ultraviolet detachable adhesive composition and preparation of a resin using the same

An adhesive composition comprising a polymerizable monomer, a photocatalyst, a co-initiator, and a photoinitiation monomer was prepared, and a resin was prepared by curing the composition.

As described in the following Experimental Examples, the monomer, the photocatalyst, the co-initiator (a combination of co-initiator I (DMAEAc) and co-initiator II (DMAEA)), and the photoinitiation monomer (BPPA) were mixed and stirred at room temperature until a homogeneous composition was obtained. For bulk polymerization, the monomer (n-BA and 4-HBA, volume ratio 4:1) was used as the solvent, and, in order to improve reproducibility, storage solutions of the photocatalyst, the co-initiator, and the photoinitiation monomer were prepared and diluted, and the diluted solution was stirred to prepare a uniformly mixed solution. In the adhesive composition, each component was formulated at a molar ratio of total monomers:photocatalyst:co-initiator I:co-initiator II of 100:0.001:0.3:0.2.

For each of the prepared adhesive compositions, light was irradiated under oxygen conditions in a blue LED curing device. Thereafter, a small amount of curing was performed to adjust the viscosity.

The partially cured composition was placed on a PET film, a release film was placed thereon, and the thickness of the adhesive was adjusted using an applicator. By irradiating the composition with light in a blue LED curing device (wavelength region: 455 nm), the agitated composition was cured to prepare an adhesive. Thereafter, to confirm detachment performance, ultraviolet light was irradiated for a specific time, and the peel strength before and after the ultraviolet irradiation was measured.

The structure of the resin formed from the monomers and the polymerization and detachment processes using visible light and ultraviolet light are schematically shown in FIG. 1. In the following Experimental Examples, the raw materials of the composition are indicated by the generic names in Table 1 below.

[Table 1]

| Cas No. | Common Name | Chemical Name |
|---|---|---|
| 141-32-2 | n-BA | n-butyl acrylate |
| 2478-10-6 | 4-HBA | 4-hydroxybutyl acrylate |
| 103-11-7 | 2-EHA | 2-ethylhexyl acrylate |
| 818-61-1 | 2-HEA | 2-hydroxyethyl acrylate |
| 2439-35-2 | DMAEA | 2-(dimethylamino)ethyl acrylate |
| 1421-89-2 | DMAEAc | 2-(dimethylamino)ethyl acetate |
| 1416881-52-1 | 4Cz-IPN | 2,4,5,6-tetrakis(carbazol-9-yl)isophthalonitrile |
| 1351758-79-6 | BPPA | 3-(4-benzoylphenoxy)propyl acrylate |

### Experimental Method: Measurement of Resin Conversion Rate and Gel Fraction

To measure the conversion rate of the adhesive composition and the cured resin before and after curing, the

degree of curing was analyzed using FT-IR (Fourier Transform Infrared) spectroscopy. The conversion rate was calculated according to the equation below by comparing the degree of C=C bonds relative to C=O bonds in the composition and the resin in the analysis results.

$$\text{Conversion rate(\%)} = \frac{\frac{A_{0(C=C)}}{A_{0(C=O)}} - \frac{A_{t(C=C)}}{A_{t(C=O)}}}{\frac{A_{0(C=C)}}{A_{0(C=O)}}} \times 100$$

In the above equation, $A_{0(C=C)}$, $A_{0(C=O)}$, $A_{t(C=C)}$, and $A_{t(C=O)}$ respectively refer to the average peak areas of C=C (830-790 $cm^{-1}$) at time 0 seconds, C=O (1760-1660 $cm^{-1}$) at time 0 seconds, C=C at time t seconds, and C=O at time t seconds.

To indirectly determine the degree of crosslinking of the adhesive resin, the gel fraction was measured. The adhesive was swollen in toluene solvent for 24 hours, filtered through a mesh, and all residual solvent was removed. Thereafter, the gel fraction was calculated by comparing the mass of the adhesive before swelling ($W_1$) with the mass of the adhesive after swelling ($W_2$) as shown below.

$$\text{Gel fraction (\%)} = (W_2 / W_1) \times 100$$

**Experimental Example 1: Comparative experiment of adhesive detachability according to the addition of the photoinitiation monomer**

Using the method of Preparation Example 1, an adhesive composition was prepared by adjusting the amount of the photoinitiation monomer according to the composition of Table 2, and a resin was prepared by irradiating visible light for 10 minutes. For the adhesive resin, the initial adhesion strength was measured, ultraviolet light was irradiated, and then the adhesion strength was measured to confirm the adhesion strength reduction rate.

In the adhesive composition, each component was formulated at a molar ratio of total monomers:photocatalyst:co-initiator I:co-initiator II of 100:0.001:0.3:0.2.

[Table 2]

| Classification | Co-initiator I (ppm) | Co-initiator II (ppm) | Photocatalyst (ppm) | Photoinitiation monomer (mol%) | UV integrated irradiation dosage ($mJ/cm^2$) | Initial adhesive strength (N/cm) | Adhesive strength after UV irradiation (N/cm) | Adhesive strength reduction (%) |
|---|---|---|---|---|---|---|---|---|
| 1-1 | DMAEAc (3000) | DMAEA (2000) | 4Cz-IPN(10) | 0 | 12,600 | 3.53 | 3.50 | 0.8 |
| 1-2 | DMAEAc (3000) | DMAEA (2000) | 4Cz-IPN(10) | 0.1 | 12,600 | 2.89 | 2.24 | 22.8 |
| 1-3 | DMAEAc (3000) | DMAEA (2000) | 4Cz-IPN(10) | 1 | 12,600 | 3.01 | 0.19 | 98.0 |
| 1-4 | DMAEAc (3000) | DMAEA (2000) | 4Cz-IPN(10) | 5 | 12,600 | 2.76 | 0.11 | 96.1 |

As a result of the experiment, in the case of the adhesive composition comprising the polymerizable monomer and the photoinitiating system, there was no significant difference in adhesion strength before and after UV irradiation in the cured state by visible light, however, in the case of comprising the photoinitiation monomer, the adhesion strength greatly decreased after UV irradiation, and particularly, when added in an amount of 1 mol% or more, very low adhesion strength was confirmed.

From the above results, it could be confirmed that the adhesive prepared by using the photoinitiation system and the photoinitiation monomer together according to the present invention can be very easily detached only by irradiating UV in the cured state.

**Experimental Example 2: Comparative experiment of adhesive detachability according to the amount of the photoinitiation monomer and the light dosage**

Using the method of Preparation Example 1, an adhesive composition was prepared by adjusting the amount of the photoinitiation monomer according to the compositions of Tables 3 to 7, and a resin was prepared by irradiating visible light for 10 minutes. For the adhesive resin, the initial adhesion strength was measured, the UV light was irradiated by adjusting the light dosage, and then the adhesion strength was measured to confirm the adhesion strength reduction rate, and the graphs of adhesion strength and reduction rate of Tables 5 to 7 were shown in Figures 2 and 3.

[Table 3]

| Classification | Co-initiator I (ppm) | Co-initiator II (ppm) | Photocatalyst (ppm) | Photoinitiation monomer (mol%) | UV integrated irradiation dosage ($mJ/cm^2$) | Initial adhesive strength (N/cm) | Adhesive strength after UV irradiation (N/cm) | Adhesive strength reduction (%) |
|---|---|---|---|---|---|---|---|---|
| 2-1 | DMAEAc (3000) | DMAEA (2000) | 4Cz-IPN(10) | 0 | 0 | 3.28 | - | - |
| 2-2 | DMAEAc (3000) | DMAEA (2000) | 4Cz-IPN(10) | 0 | 840 | | 3.28 | 0 |
| 2-3 | DMAEAc (3000) | DMAEA (2000) | 4Cz-IPN(10) | 0 | 1680 | | 3.31 | -0.9 |
| 2-4 | DMAEAc (3000) | DMAEA (2000) | 4Cz-IPN(10) | 0 | 2520 | | 3.25 | 0.9 |
| 2-5 | DMAEAc (3000) | DMAEA (2000) | 4Cz-IPN(10) | 0 | 3360 | | *3.55* | -8.2 |
| 2-6 | DMAEAc (3000) | DMAEA (2000) | 4Cz-IPN(10) | 0 | 4200 | | 3.45 | -5.2 |
| 2-7 | DMAEAc (3000) | DMAEA (2000) | 4Cz-IPN(10) | 0 | 12600 | | 3.76 | -14.6 |

[Table 4]

| Classification | Co-initiator I (ppm) | Co-initiator II (ppm) | Photocatalyst (ppm) | Photoinitiation monomer (mol%) | UV integrated irradiation dosage (mJ/cm$^2$) | Initial adhesive strength (N/cm) | Adhesive strength after UV irradiation (N/cm) | Adhesive strength reduction (%) |
|---|---|---|---|---|---|---|---|---|
| 3-1 | DMAEAc (3000) | DMAEA (2000) | 4Cz-IPN(10) | 0.5 | 0 | 3.26 | - | - |
| 3-2 | DMAEAc (3000) | DMAEA (2000) | 4Cz-IPN(10) | 0.5 | 840 | | 2.46 | 24.5 |
| 3-3 | DMAEAc (3000) | DMAEA (2000) | 4Cz-IPN(10) | 0.5 | 1680 | | 2.30 | 29.4 |
| 3-4 | DMAEAc (3000) | DMAEA (2000) | 4Cz-IPN(10) | 0.5 | 2520 | | 2.12 | 35.0 |
| 3-5 | DMAEAc (3000) | DMAEA (2000) | 4Cz-IPN(10) | 0.5 | 3360 | | 2.13 | 34.7 |
| 3-6 | DMAEAc (3000) | DMAEA (2000) | 4Cz-IPN(10) | 0.5 | 4200 | | 1.89 | 42.0 |
| 3-7 | DMAEAc (3000) | DMAEA (2000) | 4Cz-IPN(10) | 0.5 | 12600 | | 1.45 | 55.5 |

[Table 5]

| Classification | Co-initiator I (ppm) | Co-initiator II (ppm) | Photocatalyst (ppm) | Photoinitiation monomer (mol%) | UV integrated irradiation dosage (mJ/cm$^2$) | Initial adhesive strength (N/cm) | Adhesive strength after UV irradiation (N/cm) | Adhesive strength reduction (%) |
|---|---|---|---|---|---|---|---|---|
| 4-1 | DMAEAc (3000) | DMAEA (2000) | 4Cz-IPN(10) | 1 | 0 | 3.01 | - | - |
| 4-2 | DMAEAc (3000) | DMAEA (2000) | 4Cz-IPN(10) | 1 | 840 | | 1.60 | 42.0 |
| 4-3 | DMAEAc (3000) | DMAEA (2000) | 4Cz-IPN(10) | 1 | 1680 | | 1.12 | 62.8 |
| 4-4 | DMAEAc (3000) | DMAEA (2000) | 4Cz-IPN(10) | 1 | 2520 | | 0.58 | 78.8 |
| 4-5 | DMAEAc (3000) | DMAEA (2000) | 4Cz-IPN(10) | 1 | 3360 | | 0.45 | 85.1 |
| 4-6 | DMAEAc (3000) | DMAEA (2000) | 4Cz-IPN(10) | 1 | 4200 | | 0.40 | 85.5 |
| 4-7 | DMAEAc (3000) | DMAEA (2000) | 4Cz-IPN(10) | 1 | 5880 | | 0.34 | 87.6 |
| 4-8 | DMAEAc (3000) | DMAEA (2000) | 4Cz-IPN(10) | 1 | 7560 | | 0.19 | 93.0 |
| 4-9 | DMAEAc (3000) | DMAEA (2000) | 4Cz-IPN(10) | 1 | 12600 | | 0.06 | 97.9 |

[Table 6]

| Classification | Co-initiator I (ppm) | Co-initiator II (ppm) | Photocatalyst (ppm) | Photoinitiation monomer (mol%) | UV integrated irradiation dosage (mJ/cm$^2$) | Initial adhesive strength (N/cm) | Adhesive strength after UV irradiation (N/cm) | Adhesive strength reduction (%) |
|---|---|---|---|---|---|---|---|---|
| 5-1 | DMAEAc (3000) | DMAEA (2000) | 4Cz-IPN(10) | 3 | 0 | 2.76 | - | - |
| 5-2 | DMAEAc (3000) | DMAEA (2000) | 4Cz-IPN(10) | 3 | 840 | | 1.35 | 51.2 |
| 5-3 | DMAEAc (3000) | DMAEA (2000) | 4Cz-IPN(10) | 3 | 1680 | | 1.00 | 63.9 |
| 5-4 | DMAEAc (3000) | DMAEA (2000) | 4Cz-IPN(10) | 3 | 2520 | | 0.52 | 81.3 |
| 5-5 | DMAEAc (3000) | DMAEA (2000) | 4Cz-IPN(10) | 3 | 3360 | | 0.27 | 90.1 |
| 5-6 | DMAEAc (3000) | DMAEA (2000) | 4Cz-IPN(10) | 3 | 4200 | | 0.21 | 92.4 |
| 5-7 | DMAEAc (3000) | DMAEA (2000) | 4Cz-IPN(10) | 3 | 5880 | | 0.21 | 92.3 |
| 5-8 | DMAEAc (3000) | DMAEA (2000) | 4Cz-IPN(10) | 3 | 7560 | | 0.17 | 93.7 |
| 5-9 | DMAEAc (3000) | DMAEA (2000) | 4Cz-IPN(10) | 3 | 12600 | | 0.08 | 97.2 |

[Table 7]

| Classification | Co-initiator I (ppm) | Co-initiator II (ppm) | Photocatalyst (ppm) | Photoinitiation monomer (mol%) | UV integrated irradiation dosage ($mJ/cm^2$) | Initial adhesive strength (N/cm) | Adhesive strength after UV irradiation (N/cm) | Adhesive strength reduction (%) |
|---|---|---|---|---|---|---|---|---|
| 6-1 | DMAEAc (3000) | DMAEA (2000) | 4Cz-IPN(10) | 5 | 0 | 2.76 | - | - |
| 6-2 | DMAEAc (3000) | DMAEA (2000) | 4Cz-IPN(10) | 5 | 840 | | 1.11 | 59.9 |
| 6-3 | DMAEAc (3000) | DMAEA (2000) | 4Cz-IPN(10) | 5 | 1680 | | 0.67 | 75.7 |
| 6-4 | DMAEAc (3000) | DMAEA (2000) | 4Cz-IPN(10) | 5 | 2520 | | 0.35 | 87.2 |
| 6-5 | DMAEAc (3000) | DMAEA (2000) | 4Cz-IPN(10) | 5 | 3360 | | 0.29 | 89.6 |
| 6-6 | DMAEAc (3000) | DMAEA (2000) | 4Cz-IPN(10) | 5 | 4200 | | 0.19 | 93.3 |
| 6-7 | DMAEAc (3000) | DMAEA (2000) | 4Cz-IPN(10) | 5 | 5880 | | 0.11 | 95.9 |
| 6-8 | DMAEAc (3000) | DMAEA (2000) | 4Cz-IPN(10) | 5 | 7560 | | 0.12 | 95.7 |
| 6-9 | DMAEAc (3000) | DMAEA (2000) | 4Cz-IPN(10) | 5 | 12600 | | 0.11 | 96.0 |

Referring to the experimental results of Tables 3 to 7, in the case where the photoinitiation monomer was not added, no adhesion strength reduction phenomenon occurred and, rather, a tendency of adhesion strength increase appeared, however, it could be confirmed that detachability by UV irradiation appeared when the photoinitiation monomer was added. In addition, as the amount of the photoinitiation monomer increased from 0.5 mol% to 1 mol%, the adhesion strength reduction rate increased even under the same light dosage, and when the amount was increased to 3 mol% and 5 mol%, similar or slightly higher adhesion strength reduction rates were observed.

Accordingly, it was confirmed that, in the photoinitiation system of the present invention, only by adding the photoinitiation monomer, a property in which the adhesion strength is greatly reduced by UV irradiation is imparted, thereby making it possible to prepare an ultraviolet detachable adhesive resin.

In addition, for the adhesive composition of Table 6 having a photoinitiation monomer amount of 3 mol%, the graphs of adhesion strength (peel strength), conversion rate, and gel fraction according to the irradiation dosage were shown in Figure 4. Referring to Figure 4, it could be confirmed that, in the ultraviolet detachable adhesive composition, the gel fraction was 90% or more at a light dosage of 840 $mJ/cm^2$ and the conversion rate after UV irradiation reached a saturation trend line. From this, it was found that, in the adhesive composition of the present invention, all monomers forming the resin during visible light curing were consumed, and, upon UV irradiation, detachment was possible through a principle in which the viscoelastic properties changed through the crosslinking of the photoinitiation monomer and thereby the internal stress of the adhesive increased.

**Experimental Example 3: Comparative experiment of adhesive detachability according to the amount of the photoinitiation monomer**

Using the method of Preparation Example 1, an adhesive composition was prepared by adjusting the amount of the polymerizable monomer according to the composition of Table 8, and a resin was prepared by irradiating visible light for 10 minutes. For the adhesive resin, the initial adhesion strength was measured, UV was irradiated, and then the adhesion strength was measured to confirm the adhesion strength reduction rate.

[Table 8]

| Classification | Monomer I (molar ratio) | Monomer II (molar ratio) | Photocatalyst (ppm) | Photoinitiation monomer (mol%) | UV integrated irradiation dosage (mJ/cm$^2$) | Initial adhesive strength (N/cm) | Adhesive strength after UV irradiation (N/cm) | Adhesive strength reduction (%) |
|---|---|---|---|---|---|---|---|---|
| 7-1 | n-BA(0.9) | 4-HBA (0.1) | 4Cz-IPN(10) | 3 | 4200 | 2.71 | 0.27 | 90.0 |
| 7-2 | n-BA(0.8) | 4-HBA (0.2) | 4Cz-IPN(10) | 3 | 4200 | 2.66 | 0.11 | 95.9 |
| 7-3 | n-BA(0.7) | 4-HBA (0.3) | 4Cz-IPN(10) | 3 | 4200 | 2.70 | 0.76 | 71.9 |
| 7-4 | n-BA(0.6) | 4-HBA (0.4) | 4Cz-IPN(10) | 3 | 4200 | 2.78 | 1.07 | 61.5 |

Referring to the experimental results, when only the ratio of the polymerizable monomers was varied, it was confirmed that the adhesion strength reduction rate was highest when the n-BA:4-HBA ratio was 8:2, that the adhesion strength reduction rate somewhat decreased when the ratio of n-BA increased to 9:1, and that the adhesion strength reduction rate was low when the ratio was 7:3 or lower.

Accordingly, in the ultraviolet detachable adhesive composition of the present invention, the adhesion strength reduction rate can be varied depending on the composition of the polymerizable monomers, and it was confirmed that, when n-BA and 4-HBA were used, it was most preferable to use them at a ratio of 8:2.

**Experimental Example 4: Experiment on changes in storage modulus of the adhesive according to UV irradiation time**

Using the method of Preparation Example 1, an adhesive composition was prepared according to the composition of Table 9, and a resin was prepared by irradiating visible light for 10 minutes. For the adhesive resin, UV was irradiated at each time interval, and the viscoelastic changes were measured, and the results were shown in Figure 5.

[Table 9]

| Classification | Monomer I (molar ratio) | Monomer II (molar ratio) | Photocatalyst (ppm) | Photoinitiation monomer (mol%) | Time (min) | Storage modulus (MPa) | Loss modulus (MPa) |
|---|---|---|---|---|---|---|---|
| 8-1 | n-BA (0.8) | 4-HBA (0.2) | 4Cz-IPN(10) | 1 | 0 | 0.01925 | 0.00313 |
| 8-2 | n-BA (0.8) | 4-HBA (0.2) | 4Cz-IPN(10) | 1 | 1 | 0.04034 | 0.0013 |
| 8-3 | n-BA (0.8) | 4-HBA (0.2) | 4Cz-IPN(10) | 1 | 2 | 0.05032 | 8.76775E-4 |
| 8-4 | n-BA (0.8) | 4-HBA (0.2) | 4Cz-IPN(10) | 1 | 3 | 0.05522 | 7.70992E-4 |
| 8-5 | n-BA (0.8) | 4-HBA (0.2) | 4Cz-IPN(10) | 1 | 4 | 0.05816 | 7.23758E-4 |
| 8-6 | n-BA (0.8) | 2-HEA (0.2) | 4Cz-IPN(10) | 1 | 5 | 0.05989 | 7.213E-4 |
| 8-7 | n-BA (0.8) | 2-HEA (0.2) | 4Cz-IPN(10) | 1 | 6 | 0.06118 | 7.2201E-4 |
| 8-8 | n-BA (0.8) | 2-HEA (0.2) | 4Cz-IPN(10) | 1 | 7 | 0.06236 | 7.1616E-4 |
| 8-9 | n-BA (0.8) | 2-HEA (0.2) | 4Cz-IPN(10) | 1 | 8 | 0.06327 | 7.14661E-4 |
| 8-10 | 2-EHA (0.8) | 4-HBA (0.2) | 4Cz-IPN(10) | 1 | 9 | 0.0641 | 7.19678E-4 |
| 8-11 | 2-EHA (0.8) | 4-HBA (0.2) | 4Cz-IPN(10) | 1 | 10 | 0.06493 | 7.21946E-4 |
| 8-12 | 2-EHA (0.8) | 4-HBA (0.2) | 4Cz-IPN(10) | 1 | 11 | 0.06555 | 7.00612E-4 |
| 8-13 | 2-EHA (0.8) | 4-HBA (0.2) | 4Cz-IPN(10) | 1 | 12 | 0.06613 | 7.15217E-4 |
| 8-14 | 2-EHA (0.8) | 2-HEA (0.2) | 4Cz-IPN(10) | 1 | 13 | 0.06667 | 7.18989E-4 |

(continued)

| Classification | Monomer I (molar ratio) | Monomer II (molar ratio) | Photocatal yst (ppm) | Photoinitia tion monomer (mol%) | Time (min) | Storage modulus (MPa) | Loss modulus (MPa) |
|---|---|---|---|---|---|---|---|
| 8-15 | 2-EHA (0.8) | 2-HEA (0.2) | 4Cz-IPN(10) | 1 | 14 | 0.06716 | 7.31711E-4 |
| 8-16 | 2-EHA (0.8) | 2-HEA (0.2) | 4Cz-IPN(10) | 1 | 15 | 0.06746 | 7.1625E-4 |

Referring to the experimental results, when the UV irradiation was continued, the storage modulus increased and the loss modulus decreased, and it was confirmed that the change occurred rapidly when irradiated for the initial 1 minute and then changed gradually thereafter.

**Experimental Example 5: Comparison experiment of adhesive detachability according to the types of monomers and adherends**

Using the method of Preparation Example 1, an adhesive composition was prepared by varying the types of monomers according to the composition of Table 10, and a resin was prepared by irradiating visible light for 10 minutes. The adhesive resin was attached to different types of adherends to measure the initial adhesion strength, and after UV irradiation, the adhesion strength was compared.

[Table 10]

| Classification | Monomer I (molar ratio) | Monomer II (molar ratio) | Photocatal yst (ppm) | Photoinitia tion monomer (mol%) | Adherend | Initial adhesion strength (N/cm) | Adhesion strength after UV irradiation (N/cm) |
|---|---|---|---|---|---|---|---|
| 9-1 | n-BA(0.8) | 4-HBA (0.2) | 4Cz-IPN(10) | 3 | Glass | 2.76 | 0.14 |
| 9-2 | n-BA(0.8) | 4-HBA (0.2) | 4Cz-IPN(10) | 3 | UTG | 2.45 | 0.23 |
| 9-3 | n-BA(0.8) | 4-HBA (0.2) | 4Cz-IPN(10) | 3 | PI | 6.70 | 0.55 |
| 9-4 | n-BA(0.8) | 2-HEA (0.2) | 4Cz-IPN(10) | 3 | Glass | 3.84 | 1.72 |
| 9-5 | n-BA(0.8) | 2-HEA (0.2) | 4Cz-IPN(10) | 3 | UTG | 2.98 | 0.77 |
| 9-6 | n-BA(0.8) | 2-HEA (0.2) | 4Cz-IPN(10) | 3 | PI | 3.21 | 1.14 |
| 9-7 | 2-EHA (0.8) | 4-HBA (0.2) | 4Cz-IPN(10) | 3 | Glass | 3.56 | 0.26 |
| 9-8 | 2-EHA (0.8) | 4-HBA (0.2) | 4Cz-IPN(10) | 3 | UTG | 2.41 | 0.31 |
| 9-9 | 2-EHA (0.8) | 4-HBA (0.2) | 4Cz-IPN(10) | 3 | PI | 4.97 | 1.16 |
| 9-10 | 2-EHA (0.8) | 4-HEA (0.2) | 4Cz-IPN(10) | 3 | Glass | 4.14 | 1.40 |
| 9-11 | 2-EHA (0.8) | 4-HEA (0.2) | 4Cz-IPN(10) | 3 | UTG | 3.30 | 0.96 |
| 9-12 | 2-EHA (0.8) | 4-HEA (0.2) | 4Cz-IPN(10) | 3 | PI | 4.21 | 1.74 |

Referring to the above experimental results, the ultraviolet detachable adhesive of the present invention exhibited the lowest initial adhesion strength on the UTG adherend, and showed high initial adhesion strength and high adhesion strength after UV irradiation on the PI adherend. When the adhesive was used on a glass or UTG adherend, it was confirmed that the combinations of n-BA and 4-HBA, and 2-EHA and 4-HBA as monomers were the most preferable, since the adhesion strength after UV irradiation was low.

**Experimental Example 6: Comparative experiment on viscoelasticity of the adhesive according to types of monomers**

Using the method of Preparation Example 1, an adhesive composition was prepared by varying the types of polymerizable monomers according to the composition of Table 11, and a resin was prepared by irradiating visible light for 10 minutes. The change of viscoelasticity of the adhesive resin according to temperature was measured.

[Table 11]

| Classification | Monomer I (molar ratio) | Monomer II (molar ratio) | Photocatalys t (ppm) | Photoinitiati on monomer (mol%) | Temperature (°C) | Storage modulus (MPa) |
|---|---|---|---|---|---|---|
| 10-1 | n-BA (0.8) | 4-HBA (0.2) | 4Cz-IPN (10) | 3 | -20 | 0.302 |
| 10-2 | n-BA (0.8) | 4-HBA (0.2) | 4Cz-IPN (10) | 3 | 25 | 0.075 |
| 10-3 | n-BA (0.8) | 4-HBA (0.2) | 4Cz-IPN (10) | 3 | 60 | 0.051 |
| 10-4 | n-BA (0.8) | 4-HBA (0.2) | 4Cz-IPN (10) | 3 | 85 | 0.041 |
| 10-5 | n-BA (0.8) | 2-HEA (0.2) | 4Cz-IPN (10) | 3 | -20 | 1.297 |
| 10-6 | n-BA (0.8) | 2-HEA (0.2) | 4Cz-IPN (10) | 3 | 25 | 0.109 |
| 10-7 | n-BA (0.8) | 2-HEA (0.2) | 4Cz-IPN (10) | 3 | 60 | 0.073 |
| 10-8 | n-BA (0.8) | 2-HEA (0.2) | 4Cz-IPN (10) | 3 | 85 | 0.057 |
| 10-9 | 2-EHA (0.8) | 4-HBA (0.2) | 4Cz-IPN (10) | 3 | -20 | 0.212 |
| 10-10 | 2-EHA (0.8) | 4-HBA (0.2) | 4Cz-IPN (10) | 3 | 25 | 0.048 |
| 10-11 | 2-EHA (0.8) | 4-HBA (0.2) | 4Cz-IPN (10) | 3 | 60 | 0.03 |
| 10-12 | 2-EHA (0.8) | 4-HBA (0.2) | 4Cz-IPN (10) | 3 | 85 | 0.024 |
| 10-13 | 2-EHA (0.8) | 2-HEA (0.2) | 4Cz-IPN (10) | 3 | -20 | 0.563 |
| 10-14 | 2-EHA (0.8) | 2-HEA (0.2) | 4Cz-IPN (10) | 3 | 25 | 0.065 |
| 10-15 | 2-EHA (0.8) | 2-HEA (0.2) | 4Cz-IPN (10) | 3 | 60 | 0.048 |
| 10-16 | 2-EHA (0.8) | 2-HEA (0.2) | 4Cz-IPN (10) | 3 | 85 | 0.041 |

With reference to the above experimental results, in all Examples, the -20 °C condition exhibited the highest storage modulus, and the storage modulus decreased as the temperature increased. In particular, in Examples 10-9 to 10-12, the storage modulus was the lowest at each temperature, and from this, it was confirmed that the monomer combination of 2-EHA and 4-HBA had the lowest viscoelasticity results.

**Experimental Example 7: Comparative experiment on stress relaxation ratio and strain recovery ratio according to types of monomers**

Using the method of Preparation Example 1, an adhesive composition was prepared by varying the types of polymerizable monomers according to the composition of Table 12, and a resin was prepared by irradiating visible light for 10 minutes. The stress relaxation ratio and strain recovery ratio of the adhesive resin according to the types of monomers were measured at 25 °C.

[Table 12]

| Classification | Monomer I (molar ratio) | Monomer II (molar ratio) | Photocatalys t (ppm) | Photoinitiati on monomer (mol%) | Stress relaxation ratio (%) | **Strain** recovery ratio (%) |
|---|---|---|---|---|---|---|
| 11-1 | n-BA (0.8) | 4-HBA (0.2) | 4Cz-IPN (10) | 3 | 67.5 | 62.5 |
| 11-2 | n-BA (0.8) | 2-HEA (0.2) | 4Cz-IPN (10) | 3 | 66.2 | 60.7 |
| 11-3 | 2-EHA (0.8) | 4-HBA (0.2) | 4Cz-IPN (10) | 3 | 82.5 | 65.1 |
| 11-4 | 2-EHA (0.8) | 2-HEA (0.2) | 4Cz-IPN (10) | 3 | 72.1 | 56.5 |

With reference to the above experimental results, Example 11-3 exhibited the highest stress relaxation ratio and strain recovery ratio, and this was interpreted as corresponding to the viscoelasticity results of the 2-EHA and 4-HBA monomer combination tested in Experimental Example 6. Accordingly, from the above experimental results, it was confirmed that the monomer combination was the most preferable and was most suitable when used for foldable display materials.

**Preparation Example 2: Preparation of ultraviolet detachable adhesive composition and resin prepared by using the same**

An adhesive composition comprising a polymerizable monomer, a photoinitiator, and a photoinitiator monomer (ultraviolet detachable monomer) was prepared, and a resin was prepared by curing the composition.

The polymerizable monomers (2-EHA:HBA = 3:1), the photoinitiator (Irgacure 819, 1000 ppm), and the photoinitiator monomer (BPPP) were mixed and stirred at room temperature until a homogeneous composition was obtained. In the adhesive composition, the photoinitiator was expressed in ppm based on the number of moles of the photoinitiator relative to the total number of moles of the monomers, and the photoinitiator monomer was expressed in percent (%) based on the number of moles of the photoinitiator monomer relative to the total number of moles of the monomers.

The prepared adhesive composition was degassed with nitrogen gas for 30 minutes to remove oxygen. Thereafter, the stirred composition was cured by irradiating light for 1 to 10 seconds at an intensity of 25 $mW/cm^2$ using a blue LED curing device (wavelength range: 455 nm) to prepare an adhesive resin.

The partially cured composition was placed on a PET film, a release film was overlaid, and the thickness of the adhesive was adjusted using an applicator. The composition, in the stirred state, was cured by irradiating light using a blue LED curing device (wavelength range: 452 nm) to prepare an adhesive film. Thereafter, in order to confirm detachability, ultraviolet light (wavelength range: 366 nm) was irradiated for a predetermined time, and the peel strength before and after UV irradiation was measured.

In the following Experimental Examples, the raw materials of the composition are indicated by the generic names shown in Table 13 below.

[Table 13]

| CAS No. | Designation | Chemical name |
|---|---|---|
| 103-11-7 | 2-EHA | 2-ethylhexyl acrylate |
| 2478-10-6 | HBA | 4-hydroxybutyl acrylate |
| 162881-26-7 | Irgacure 819 | bis(2,4,6-trimethylbenzoyl)phenylphosp hine oxide |
| 1351758-79-6 | BPPP | 3-(4-benzoylphenoxy)propyl 2-propenoate |

**Experimental Example 8: Comparative experiment of conversion rate of prepolymers according to the amount of the photoinitiator monomer**

Using the method of Preparation Example 2, an adhesive composition was prepared by adjusting the amount of the photoinitiator monomer according to the conditions shown in Table 14 below.

Each adhesive composition was irradiated with light of 455 nm wavelength at an intensity of 25 $mW/cm^2$ for 5 seconds to prepare a prepolymer, and the conversion rate was measured.

[Table 14]

| Classification | Photoinitiation monomer (mol%) | Irradiation dosage ($mJ/cm^2$) | Conversion rate (%) |
|---|---|---|---|
| 12-1 | - | 125 | 5.95 |
| 12-2 | 1 | 125 | 6.23 |
| 12-3 | 3 | 125 | 4.98 |

According to the above experimental results, it was found that in the present invention, no significant difference in the conversion rate of the prepolymer occurs according to the addition of the photoinitiator monomer.

**Experimental Example 9: Comparative experiment of conversion rates of films according to the amount of the photoinitiator monomer and the irradiation dosage**

Using the method of Preparation Example 2, adhesive films were prepared by adjusting the amount of the photoinitiator monomer and the light irradiation dosage according to the conditions shown in Table 15 below.

In the case of the adhesive films, light of 452 nm wavelength was irradiated at an intensity of 10 $mW/cm^2$ for 10 minutes to prepare films having a thickness of 50 $\mu$m, and the conversion rate of each prepared film was measured, and the results are shown in FIG. 6 and in Table 15 below.

[Table 15]

| Classification | Photoinitiation monomer (mol%) | Irradiation dosage ($mJ/cm^2$) | Conversion rate (%) |
|---|---|---|---|
| 13-1 | - | 100 | 35.7 |
| 13-2 | - | 300 | 70.1 |
| 13-3 | - | 600 | 94.2 |
| 13-4 | - | 1800 | 97.3 |
| 13-5 | - | 3000 | 100 |
| 13-6 | - | 6000 | 100 |
| 13-7 | 1 | 100 | 29.9 |
| 13-8 | 1 | 300 | 63.6 |
| 13-9 | 1 | 600 | 93.9 |
| 13-10 | 1 | 1800 | 99.5 |
| 13-11 | 1 | 3000 | 100 |
| 13-12 | 1 | 6000 | 100 |
| 13-13 | 3 | 100 | 36.1 |
| 13-14 | 3 | 300 | 67.8 |
| 13-15 | 3 | 600 | 97.0 |
| 13-16 | 3 | 1800 | 98.8 |
| 13-17 | 3 | 3000 | 100 |
| 13-18 | 3 | 6000 | 100 |

According to the above experimental results, no significant difference in the film conversion rate occurs depending on whether the photoinitiator monomer is added or on its amount. When 1 mol% or 3 mol% of the photoinitiator monomer was added, a conversion rate of 90% or higher was obtained when the irradiation dosage was adjusted to 600 $mJ/cm^2$ or more, and a conversion rate reaching 100% was obtained when the irradiation dosage was adjusted to 3,000 $mJ/cm^2$ or more.

These results indicate that the photoinitiator monomer in the adhesive composition of the present invention does not cause a decrease in the conversion rate, and that excellent conversion rates can be achieved depending on the irradiation dosage.

**Experimental Example 10: Comparative experiment of adhesive strength of films according to the amount of the photoinitiator monomer**

Using the method of Preparation Example 2, adhesive compositions were prepared by adjusting the amount of the photoinitiator monomer according to the conditions shown in Table 16 below.

Each adhesive composition was irradiated with light at a wavelength of 455 nm at an intensity of 25 mW/$cm^2$ for 5 seconds to prepare a prepolymer, and then irradiated with light at a wavelength of 452 nm at an intensity of 10 mW/$cm^2$ for 10 minutes to prepare a film having a thickness of 50 μm. For each adhesive resin, the initial adhesive strength was measured, and after UV irradiation, the adhesive strength was measured again to confirm the adhesive strength reduction ratio.

[Table 16]

| Classification | Photoinitiation monomer (mol%) | UV integrated irradiation dosage (mJ/$cm^2$) | Initial adhesive strength (N/cm) | Adhesive strength after UV irradiation (N/cm) | Adhesive strength reduction ratio (%) |
|---|---|---|---|---|---|
| 14-1 | 0 | 4200 | 5.92 | 5.63 | 4.9 |
| 14-2 | 1 | 4200 | 5.27 | 1.28 | 75.7 |
| 14-3 | 3 | 4200 | 5.97 | 0.31 | 94.8 |

According to the experimental results, in the case of an adhesive composition comprising polymerizable monomers and a photoinitiator but not comprising a photoinitiator monomer, no significant difference was observed in the adhesive strength before and after UV irradiation in the cured state under visible light. However, when the photoinitiator monomer was included, the adhesive strength markedly decreased after UV irradiation, and in particular, when 3 mol% of the photoinitiator monomer was added, the adhesive strength reduction ratio reached 94.8%, which is extremely high.

From these results, it was confirmed that the adhesive prepared using the photoinitiator monomer according to the present invention can be readily detached by simple UV irradiation in the cured state, and that, in terms of ultraviolet detachability, the amount of 3 mol% is preferable.

**Experimental Example 11: Comparative experiment of adhesive detachability according to the amount of the photoinitiator monomer and UV irradiation dosage**

Using the method of Preparation Example 2, adhesives were prepared by adjusting the amount of the photoinitiator monomer and the UV irradiation dosage according to the conditions shown in Table 17 below. The adhesive strength reduction ratio was then confirmed according to the method of Experimental Example 3, and the results are shown in FIG. 7 and Table 17 below.

[Table 17]

| Classification | Photoinitiation monomer (mol%) | UV integrated irradiation dosage (mJ/$cm^2$) | Initial adhesive strength (N/cm) | Adhesive strength after UV irradiation (N/cm) | Adhesive strength reduction (%) |
|---|---|---|---|---|---|
| 15-1 | 1 | 0 | 5.27 | 5.27 | 0 |
| 15-2 | 1 | 600 | 5.27 | 4.02 | 23.7 |
| 15-3 | 1 | 1800 | 5.27 | 1.88 | 64.3 |
| 15-4 | 1 | 3000 | 5.27 | 1.65 | 68.7 |
| 15-5 | 1 | 4200 | 5.27 | 1.28 | 75.7 |
| 15-6 | 3 | 0 | 5.97 | 5.97 | 0 |
| 15-7 | 3 | 600 | 5.97 | 2.31 | 61.3 |
| 15-8 | 3 | 1800 | 5.97 | 1.14 | 80.9 |
| 15-9 | 3 | 3000 | 5.97 | 0.46 | 92.3 |
| 15-10 | 3 | 4200 | 5.97 | 0.31 | 94.8 |

Referring to the above experimental results, it was confirmed that detachability appears when UV is irradiated to the adhesive comprising the photoinitiator monomer. In addition, as the amount of the photoinitiator monomer increased from 1 mol% to 3 mol%, the adhesive strength reduction ratio increased even at the same UV irradiation dosage, and when the amount of the photoinitiator monomer was the same, the adhesive strength reduction ratio increased as the UV irradiation dosage increased. In particular, when 3 mol% of the photoinitiator monomer was added, the adhesive strength reduction ratio was 90% or more when the UV integrated irradiation dosage was 3000 $mJ/cm^2$ or higher, which was highly excellent.

Accordingly, in the present invention, by merely adding the photoinitiator monomer, a property can be imparted in which the adhesive strength is significantly reduced by UV irradiation, thereby enabling the preparation of an ultraviolet detachable adhesive resin, and it was confirmed that the detachability can be improved by adjusting the amount of the photoinitiator monomer and the UV irradiation dosage.

Although some embodiments of the present invention have been described above, the present invention is not limited to the above-described embodiments and may be modified and varied without departing from the gist of the present invention, and such modified and varied forms shall also be understood as belonging to the technical spirit of the present invention.

## Claims

1. An ultraviolet detachable adhesive composition comprising:

   a photoinitiation monomer having an absorption property in a wavelength region of 100 to 400 nm;
   a polymerizable monomer having an ethylenic unsaturated bond; and
   a photoinitiation system comprising a photocatalyst or a photoinitiator.

2. The ultraviolet detachable adhesive composition according to claim 1,

   wherein the photoinitiation monomer comprises a compound represented by Chemical Formula 1:

   [Chemical Formula 1]

   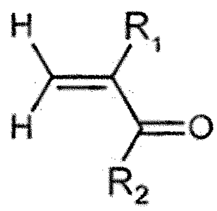

   In Chemical Formula 1,
   $R_1$ is hydrogen, deuterium, a halogen atom, or a substituted or unsubstituted $C_1$-$C_{12}$ alkyl,
   $R_2$ is -R", -CR"$_3$, -O-L-R", -O-L-O-R", -O-L-O-C(=O)-R", -NH-L-R", -NH-L-O-R" or -NH-L-O-C(=O)-R",
   L is absent, or a substituted or unsubstituted $C_1$-$C_{12}$ alkyl, and
   R" is a substituted or unsubstituted $C_1$-$C_{24}$ alkyl, $C_2$-$C_{24}$ alkenyl, $C_2$-$C_{24}$ alkynyl, $C_6$-$C_{18}$ aryl, or 4-benzoylphenyl.

3. The ultraviolet detachable adhesive composition according to claim 2,

   wherein, in Chemical Formula 1,
   $R_2$ is -O-L-R", -O-L-O-R", -O-L-O-C(=O)-R", -NH-L-R", -NH-L-O-R" or -NH-L-O-C(=O)-R",
   L is absent, or a substituted or unsubstituted $C_1$-$C_{12}$ alkyl, and
   R" is a substituted or unsubstituted $C_6$-$C_{18}$ aryl or 4-benzoylphenyl.

4. The ultraviolet detachable adhesive composition according to claim 1,
   wherein the polymerizable monomer compries an alkyl (meth)acrylate compound and an alkyl (meth)acrylate compound having a hydroxyl group.

5. The ultraviolet detachable adhesive composition according to claim 1,
   wherein the photoinitiation system absorbs light in a wavelength region of 300 to 800 nm.

6. The ultraviolet detachable adhesive composition according to claim 1, wherein the photoinitiation system comprises a cyanoarene-based photocatalyst having a thermally activated delayed fluorescence (TADF) property.

7. The ultraviolet detachable adhesive composition according to claim 6,

wherein the photocatalyst is represented by the following Chemical Formula 2:

[Chemical Formula 2]

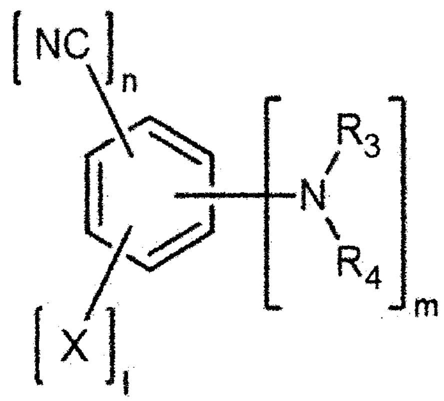

In Chemical Formula 2,
$R_3$ and $R_4$ are each independently hydrogen, deuterium, a halogen atom, a nitro group ($-NO_2$), a cyano group (-CN), -COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl; or are linked to each other to form a substituted or unsubstituted carbazole structure,
X is a halogen atom selected from the group consisting of F, Cl, Br, and I,
n is 1 or 2,
m is an integer of 3 to 5,
l is 0 or 1, and
n + m + l is an integer of 4 to 6.

8. The ultraviolet detachable adhesive composition according to claim 6,

wherein the photocatalyst is represented by Chemical Formula 3 or 4:

[Chemical Formula 3]

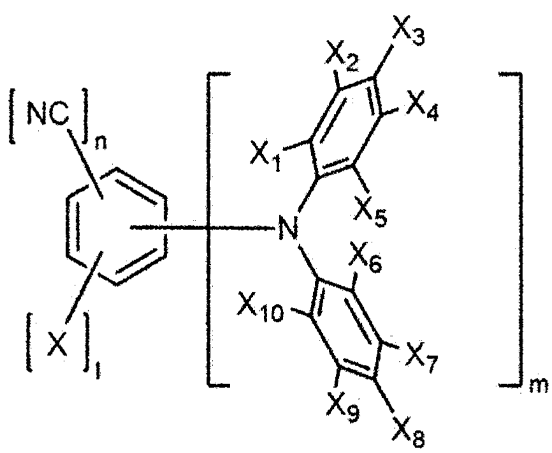

[Chemical Formula 4]

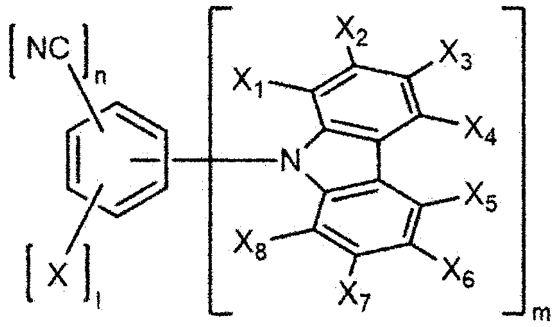

In Chemical Formula 3,
$X_1$ to $X_{10}$ are each independently hydrogen, deuterium, a halogen atom, $-NO_2$, -CN, - COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl.
In Chemical Formula 4,
$X_1$ to $X_8$ are each independently hydrogen, deuterium, a halogen atom, $-NO_2$, -CN, - COOR (R is hydrogen or a $C_1$-$C_{24}$ alkyl), or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl.
In Chemical Formulae 3 and 4,
X is each independently a halogen atom selected from the group consisting of F, Cl, Br, and I,
n is each independently 1 or 2,
m is each independently an integer of 3 to 5,
l is each independently 0 or 1, and
n + m + l is each independently an integer of 4 to 6.

**9.** The ultraviolet detachable adhesive composition according to claim 1,

wherein the photoinitiation system comprises a photocatalyst, and
the adhesive composition further comprises a co-initiator.

**10.** The ultraviolet detachable adhesive composition according to claim 9,

wherein the co-initiator comprises a co-initiator I represented by Chemical Formula 5, a co-initiator II represented by Chemical Formula 6, or both:

[Chemical Formula 5]

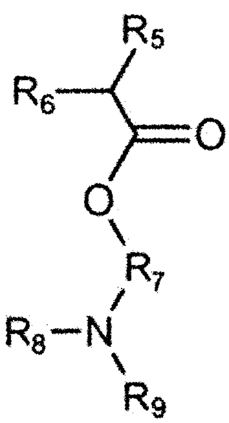

[Chemical Formula 6]

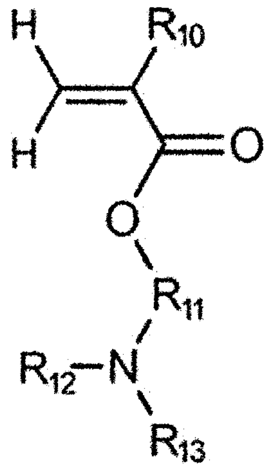

In Chemical Formula 5,
$R_5$ and $R_6$ are each independently hydrogen, deuterium, or a substituted or unsubstituted $C_1$-$C_{12}$ alkyl,
$R_7$ is absent, or a substituted or unsubstituted $C_1$-$C_{12}$ alkyl, and
$R_8$ and $R_9$ are each independently a substituted or unsubstituted $C_1$-$C_{12}$ alkyl.
In Chemical Formula 6,
$R_{10}$ is hydrogen, deuterium, a halogen atom, or a substituted or unsubstituted $C_1$-$C_{12}$ alkyl,
$R_{11}$ is absent, or a substituted or unsubstituted $C_1$-$C_{12}$ alkyl, and
$R_{12}$ and $R_{13}$ are each independently a substituted or unsubstituted $C_1$-$C_{12}$ alkyl.

**11.** The ultraviolet detachable adhesive composition according to claim 9,
wherein the co-initiator comprises an anionic co-initiator which is co-initiator III, a cationic co-initiator which is co-initiator IV, or both.

**12.** The ultraviolet detachable adhesive composition according to claim 11,
wherein the anionic co-initiator comprises a borate salt compound.

**13.** The ultraviolet detachable adhesive composition according to claim 11,
wherein the cationic co-initiator comprises at least one compound selected from the group consisting of an iodonium salt, a sulfonium salt, and a phosphonium salt.

**14.** The ultraviolet detachable adhesive composition according to claim 1,
wherein the photoinitiation system comprises a Norrish type-I photoinitiator.

**15.** The ultraviolet detachable adhesive composition according to claim 14,

wherein the Norrish type-I photoinitiator comprises a compound represented by Chemical Formula 15:

[Chemical Formula 15]

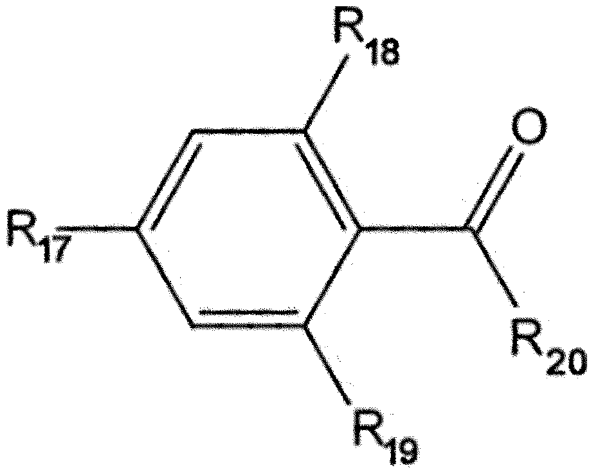

In Chemical Formula 15,
$R_{17}$, $R_{18}$, and $R_{19}$ are each independently hydrogen, deuterium, or a substituted or unsubstituted $C_1$-$C_{24}$ alkyl, $C_2$-$C_{24}$ alkenyl, $C_2$-$C_{24}$ alkynyl, $C_4$-$C_{18}$ aryl, a mercapto group (-SH), a hydroxyl group (-OH), an alkylthio group (-SR), or an alkoxy group (-OR),
and $R_{20}$ is a substituted or unsubstituted $C_1$-$C_{24}$ alkyl, $C_2$-$C_{24}$ alkenyl, $C_2$-$C_{24}$ alkynyl, $C_4$-$C_{18}$ aryl, a phosphine oxide group, a phosphinate group, an amine group, or a morpholino group.

**16.** The ultraviolet detachable adhesive composition according to claim 1,

wherein the adhesive composition further comprises a co-initiator, and
wherein the photoinitiation system comprises a Norrish type II photoinitiator which undergoes a Norrish type II reaction with the co-initiator.

**17.** The ultraviolet detachable adhesive composition according to claim 16,

wherein the Norrish type II photoinitiator comprises a compound represented by Chemical Formula 16:

[Chemical Formula 16]

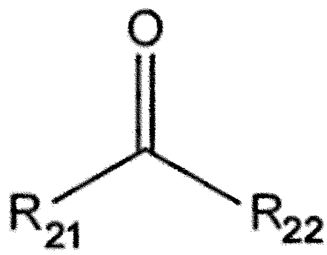

In Chemical Formula 16,
$R_{21}$ and $R_{22}$ are each independently a substituted or unsubstituted $C_1$-$C_{24}$ alkyl, $C_2$-$C_{24}$ alkenyl, $C_2$-$C_{24}$ alkynyl, or $C_4$-$C_{18}$ aryl,
and $R_{21}$ and $R_{22}$ exist independently, or one or more of the respective atoms of $R_{21}$ and $R_{22}$ are linked to each other to form a ring.

**18.** The ultraviolet detachable adhesive composition according to claim 16,

wherein the co-initiator comprises a compound represented by Chemical Formula 17:

[Chemical Formula 17]

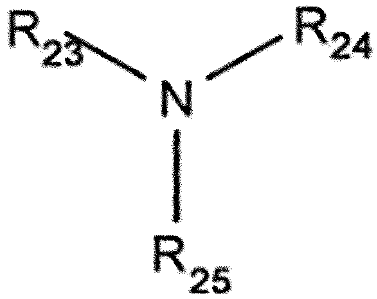

In Chemical Formula 17,

$R_{23}$, $R_{24}$, and $R_{25}$ are each independently hydrogen, deuterium, $NH_xR''_{2-x}$, -OR", - COR", -COOR", or a substituted or unsubstituted $C_1$-$C_{24}$ alkyl, $C_2$-$C_{24}$ alkenyl, $C_2$-$C_{24}$ alkynyl, $C_1$-$C_{24}$ alkoxy, or $C_4$-$C_{18}$ aryl,

R" is hydrogen or a $C_1$-$C_{24}$ alkyl, and

x is an integer of 0 to 2.

**19.** An adhesive film prepared by irradiating visible light to the ultraviolet detachable adhesive composition according to any one of claims 1 to 18.

**20.** A method for peeling off the adhesive film,
comprising irradiating ultraviolet light to the adhesive film of claim 19 to reduce adhesion.

【FIG. 1】

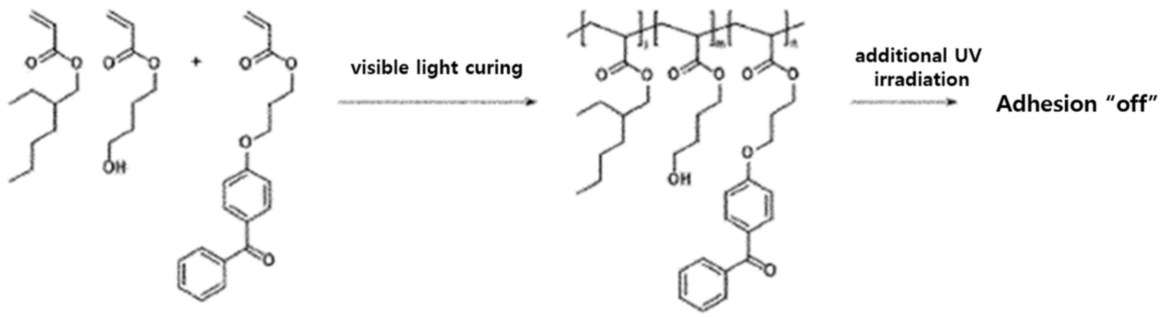


【FIG. 2】

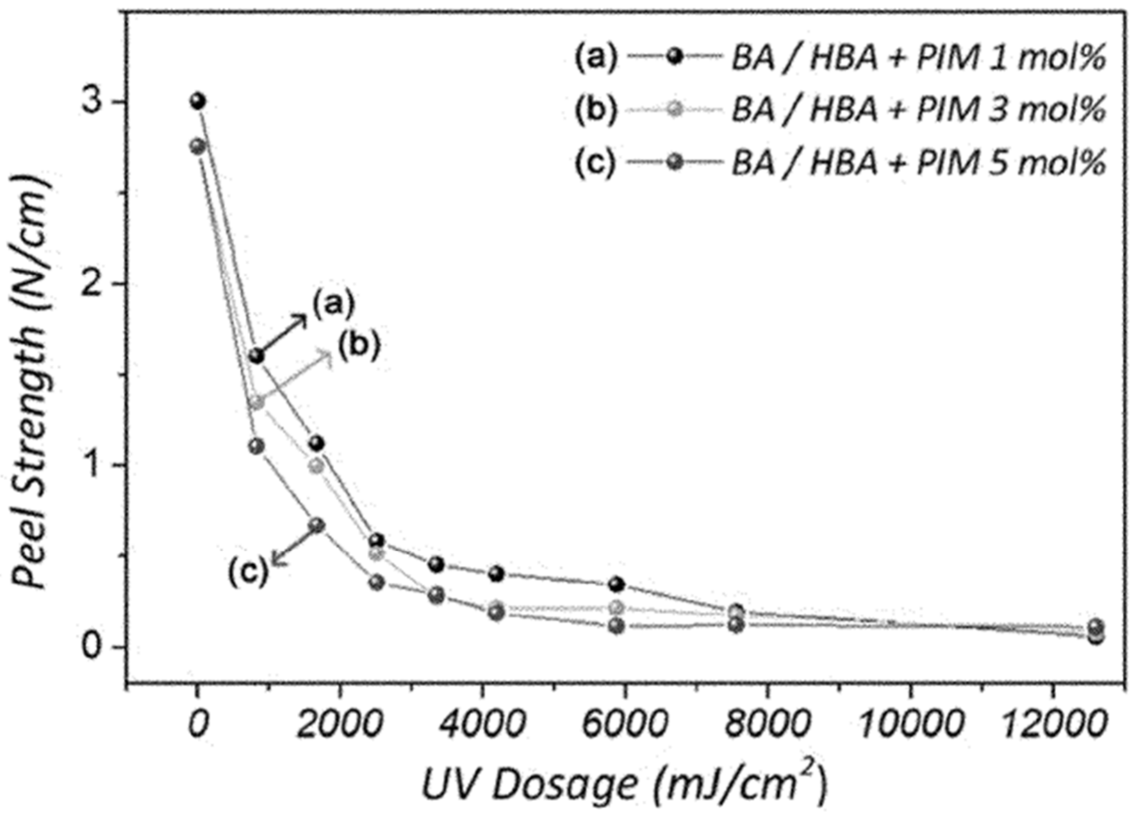


【FIG. 3】

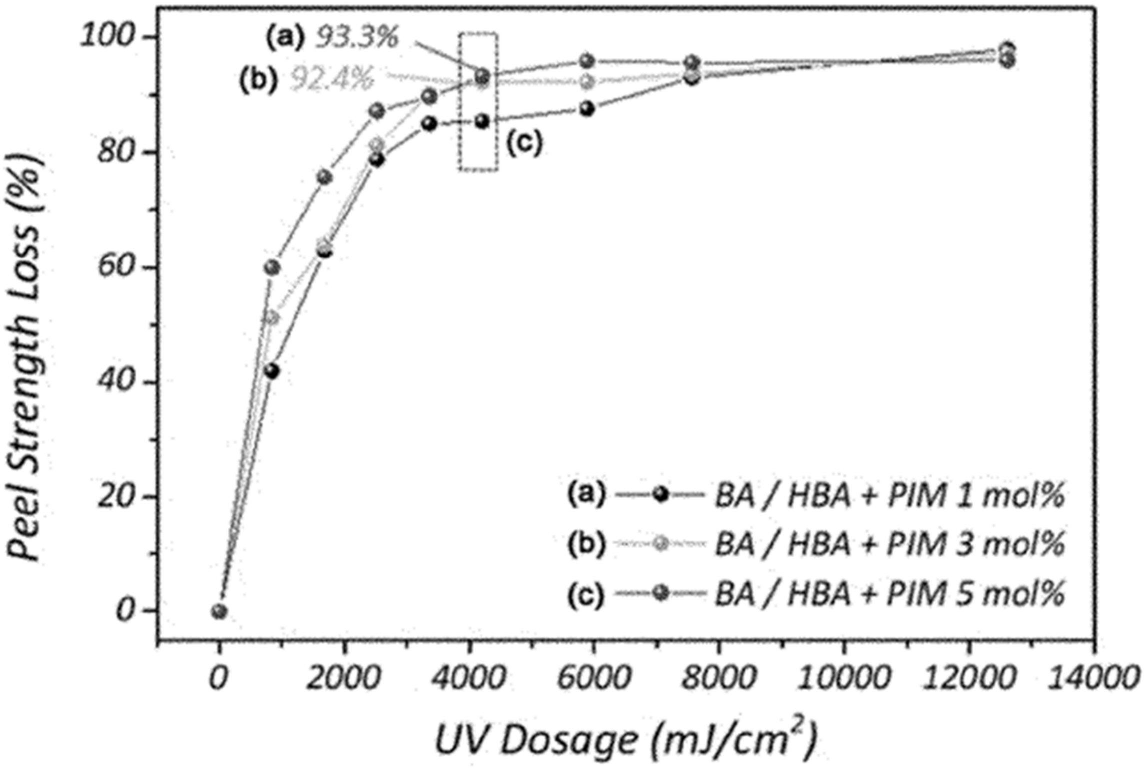
(a) 93.3%
(b) 92.4%
(c)
Peel Strength Loss (%)
0
20
40
60
80
100
0
2000
4000
6000
8000
10000
12000
14000
UV Dosage (mJ/cm2)
(a) BA / HBA + PIM 1 mol%
(b) BA / HBA + PIM 3 mol%
(c) BA / HBA + PIM 5 mol%

【FIG. 4】

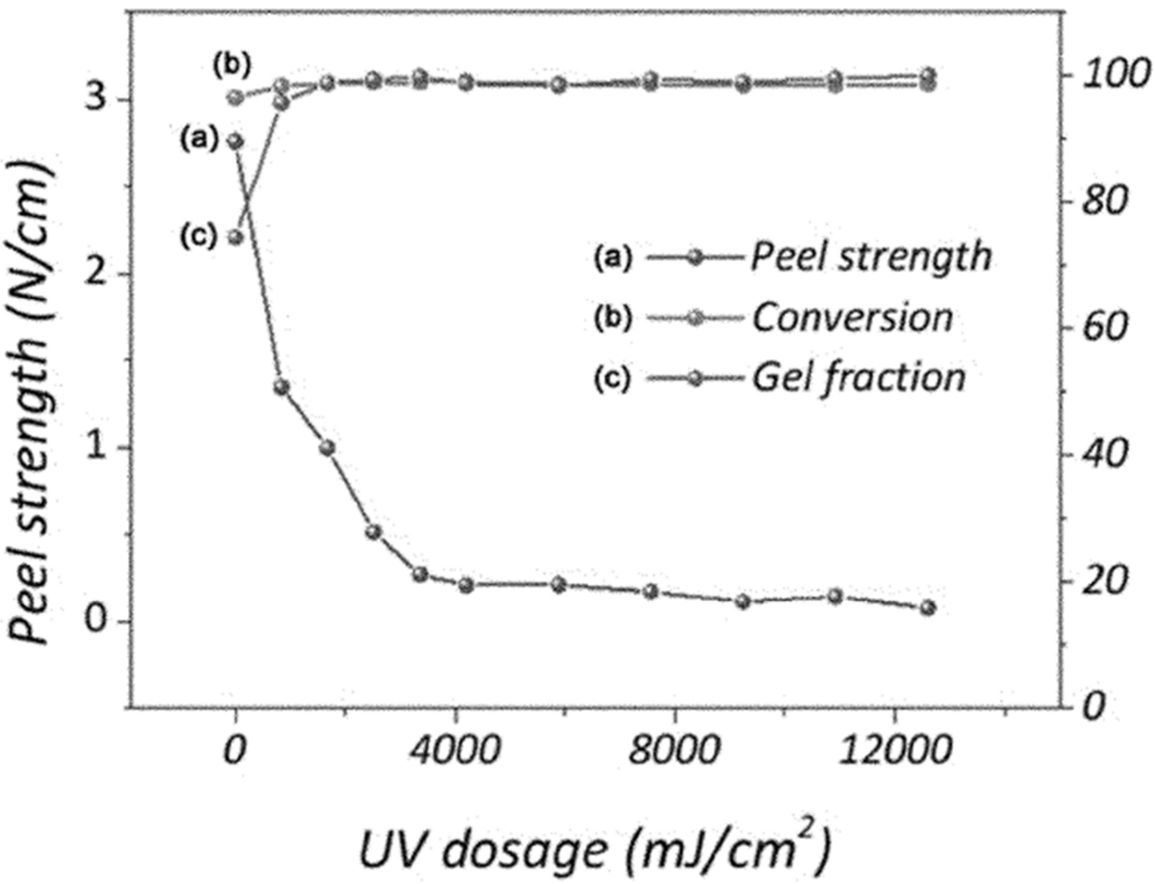
(b)
(a)
(c)
Peel strength (N/cm)
0
1
2
3
0
20
40
60
80
100
0
4000
8000
12000
UV dosage (mJ/cm2)
(a) Peel strength
(b) Conversion
(c) Gel fraction

【FIG. 5】

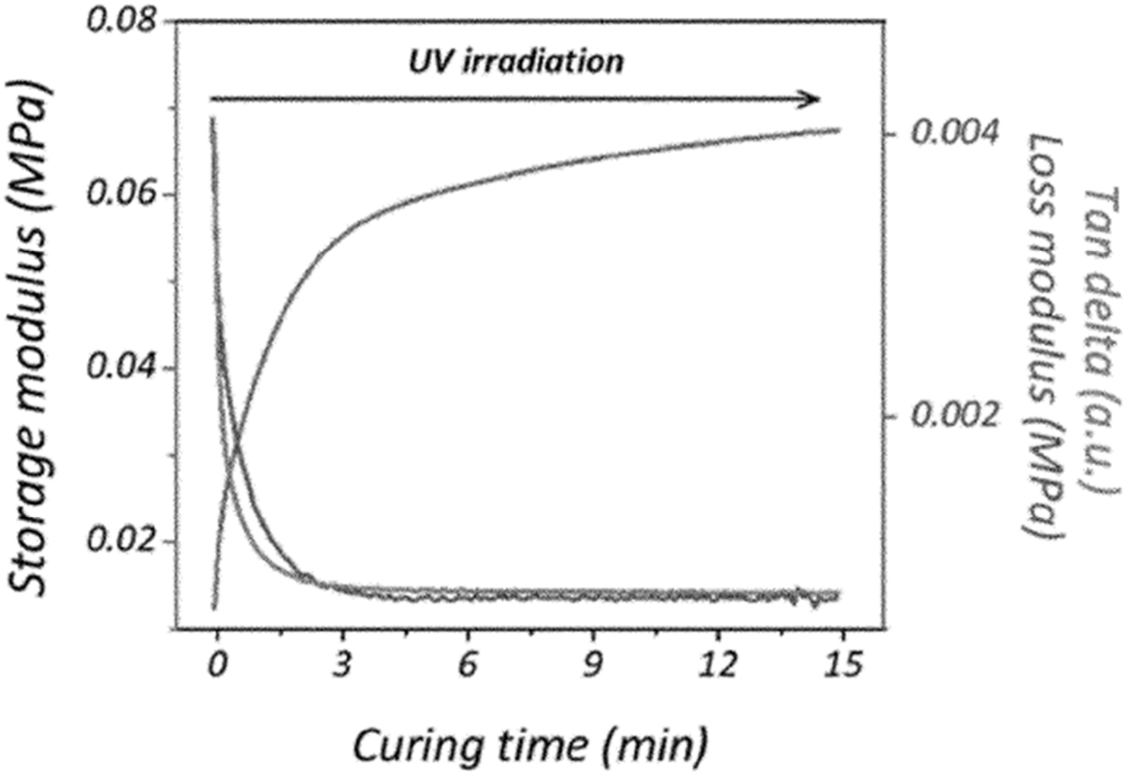
UV irradiation
Storage modulus (MPa)
Tan delta (a.u.)
Loss modulus (MPa)
0.08
0.06
0.04
0.02
0.004
0.002
0
3
6
9
12
15
Curing time (min)

【FIG. 6】

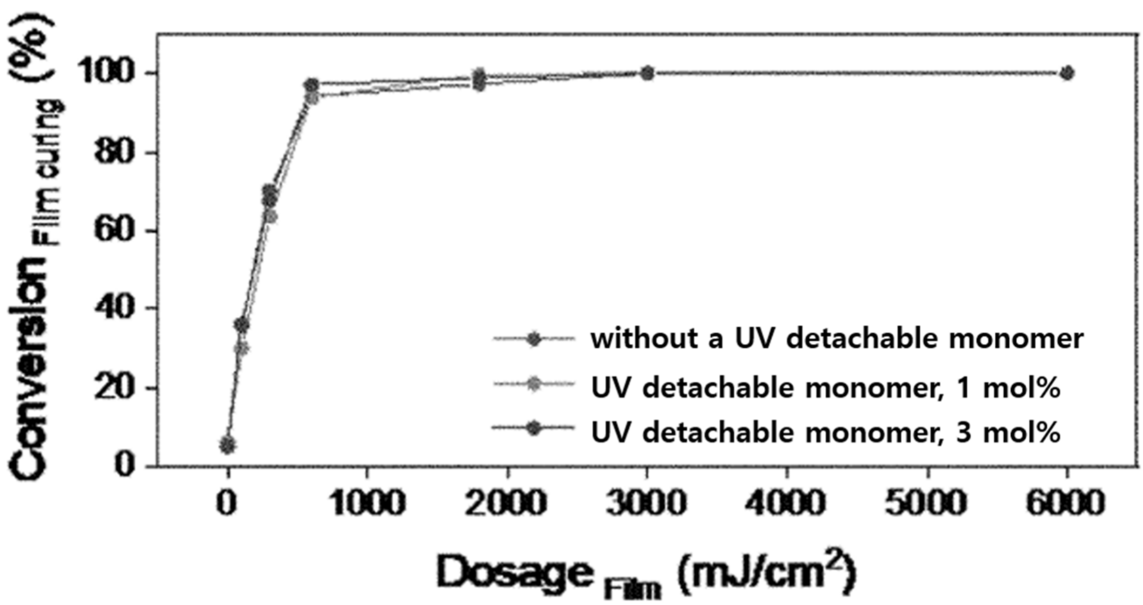
Conversion Film curing (%)
100
80
60
40
20
0
without a UV detachable monomer
UV detachable monomer, 1 mol%
UV detachable monomer, 3 mol%
0
1000
2000
3000
4000
5000
6000
Dosage Film (mJ/cm2)

【FIG. 7】

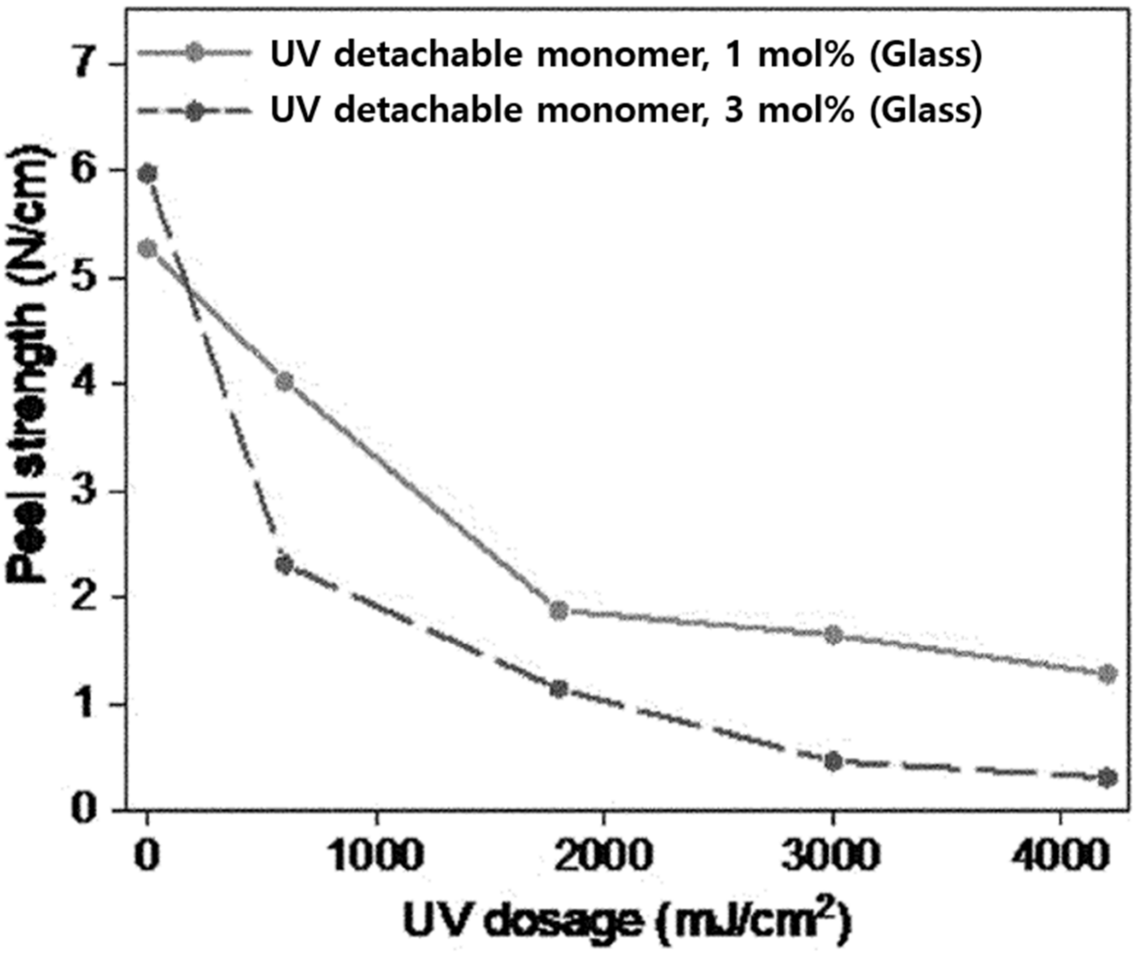
UV detachable monomer, 1 mol% (Glass)
UV detachable monomer, 3 mol% (Glass)
Peel strength (N/cm)
0
1
2
3
4
5
6
7
0
1000
2000
3000
4000
UV dosage (mJ/cm2)

## INTERNATIONAL SEARCH REPORT

International application No.
**PCT/KR2024/005333**

### A. CLASSIFICATION OF SUBJECT MATTER

**C09J 4/00**(2006.01)i; **C09J 7/30**(2018.01)i; **C09J 5/00**(2006.01)i; **C08F 220/20**(2006.01)i; **C08F 220/18**(2006.01)i; **C08F 2/50**(2006.01)i; **C09J 7/35**(2018.01)i; **C09J 9/00**(2006.01)i

According to International Patent Classification (IPC) or to both national classification and IPC

### B. FIELDS SEARCHED

Minimum documentation searched (classification system followed by classification symbols)

C09J 4/00(2006.01); B01J 35/00(2006.01); B05D 3/06(2006.01); B32B 7/12(2006.01); C08J 3/28(2006.01); C09J 7/00(2006.01); C09J 7/22(2018.01); C09J 7/38(2018.01); C09J 7/40(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 자외선(UV, Ultraviolet), 탈착(release agent), 접착제(adhesive), 시아노아렌계(cyanoarene), 광촉매(photo catalysis), 공개시제(co-initiator), 노리시(Norrish) I 형, 노리시(Norrish) II 형

### C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2019-0113633 A (LG CHEM, LTD.) 08 October 2019 (2019-10-08)<br>See claims 5 and 11; and paragraphs [0053], [0072], [0122] and [0130]. | 1-5,9,19,20<br>6-8,10-18 |
| Y | KR 10-2021-0146614 A (KOREA RESEARCH INSTITUTE OF CHEMICAL TECHNOLOGY) 06 December 2021 (2021-12-06)<br>See paragraphs [0066]-[0071]. | 6-8 |
| Y | KR 10-2018-0085218 A (KOREA ADVANCED INSTITUTE OF SCIENCE AND TECHNOLOGY) 26 July 2018 (2018-07-26)<br>See abstract; claim 4; and paragraph [0023]. | 10 |
| Y | KR 10-2023-0056653 A (NITTO DENKO CORPORATION) 27 April 2023 (2023-04-27)<br>See claim 6; and paragraphs [0026], [0029], [0044] and [0052]. | 11-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2024** | **22 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/005333**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0014503 A (LG CHEM, LTD.) 09 February 2021 (2021-02-09)<br>See claim 5; and paragraphs [0032], [0070], [0071] and [0128]. | 14-18 |
| X | WO 2022-162550 A1 (3M INNOVATIVE PROPERTIES COMPANY) 04 August 2022 (2022-08-04)<br>See claims 1 and 5; and page 15, precursor polymer 1 and page 18, table 2. | 1-3,19,20 |

Form PCT/ISA/210 (second sheet) (July 2022)

**INTERNATIONAL SEARCH REPORT**
**Information on patent family members**

International application No.
**PCT/KR2024/005333**

| Patent document cited in search report | Publication date (day/month/year) | Patent family member(s) | Publication date (day/month/year) |
|---|---|---|---|
| KR 10-2019-0113633 A | 08 October 2019 | CN 111225963 A | 02 June 2020 |
| | | CN 111225963 B | 22 February 2022 |
| | | JP 2020-537025 A | 17 December 2020 |
| | | JP 7043118 B2 | 29 March 2022 |
| | | KR 10-2203869 B1 | 18 January 2021 |
| | | TW 201942290 A | 01 November 2019 |
| | | TW I725405 B | 21 April 2021 |
| | | US 11702571 B2 | 18 July 2023 |
| | | US 2021-0171802 A1 | 10 June 2021 |
| | | WO 2019-190242 A1 | 03 October 2019 |
| KR 10-2021-0146614 A | 06 December 2021 | KR 10-2375038 B1 | 16 March 2022 |
| KR 10-2018-0085218 A | 26 July 2018 | KR 10-1905147 B1 | 08 October 2018 |
| KR 10-2023-0056653 A | 27 April 2023 | CN 116034144 A | 28 April 2023 |
| | | JP 2022-038213 A | 10 March 2022 |
| | | TW 202213560 A | 01 April 2022 |
| | | WO 2022-044441 A1 | 03 March 2022 |
| KR 10-2021-0014503 A | 09 February 2021 | KR 10-2627907 B1 | 19 January 2024 |
| WO 2022-162550 A1 | 04 August 2022 | CN 116829667 A | 29 September 2023 |
| | | CN 116867841 A | 10 October 2023 |
| | | EP 4284640 A1 | 06 December 2023 |
| | | EP 4284857 A1 | 06 December 2023 |
| | | JP 2024-521234 A | 29 May 2024 |
| | | JP 2024-521235 A | 29 May 2024 |
| | | KR 10-2023-0137328 A | 04 October 2023 |
| | | KR 10-2023-0138474 A | 05 October 2023 |
| | | US 2024-0092071 A1 | 21 March 2024 |
| | | WO 2022-162555 A1 | 04 August 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190011220
- KR 102108610